# EUROPEAN PATENT SPECIFICATION

(11) **EP 3 793 341 B1**
(45) Date of publication and mention of the grant of the patent: **28.08.2024**
(21) Application number: 19730949.5
(22) Date of filing: 14.05.2019
(51) Int. Cl.: A01C 5/06, A01C 7/08, A01C 7/20, A01G 13/02, A01C 7/04, A01C 7/06, A01C 7/10

(54) **SEEDING METHOD BY MEANS OF A SEED SOWING MACHINE CONNECTED TO A TRACTOR AND SEED SOWING MACHINE**
SÄVERFAHREN MIT EINER TRAKTORGEBUNDENEN SÄMASCHINE UND SÄMASCHINE
SEMOIR ET PROCÉDÉ DE SEMIS AVEC UN SEMOIR CONNECTÉ À UN TRACTEUR

(30) Priority: 16.05.2018 IT 201800005430
(43) Date of publication of application: 24.03.2021
(73) Proprietor: Rubiolo, Aldo, 12038 Savigliano (CN) (IT)
(72) Inventor: CARENA, Alberto, 12040 Cervere (CN) (IT); RUBIOLO, Aldo, 12038 Savigliano (CN) (IT)
(74) Representative: Aprà, Mario
(86) International application number: PCT/IB2019/053994
(87) International publication number: WO 2019/220346

(56) References cited:
- EP-A1- 2 805 596
- WO-A1-2017/182997
- GB-A- 2 019 701
- US-A- 3 315 623
- US-A- 4 117 787

## Description

The present invention relates to a seeding method by means of a seed sowing machine connected to a tractor, as well as to the related seed sowing machine.

A "seed drill" is known, which uniformly distributes seeds within at least a small furrow traced by the seed drill itself.

A known seed sowing machine of the specified type is, for example, towed by a tractor, it comprises means for containing and distributing seeds and it derives its motion of said seed distribution means from the power take-off of the tractor itself. In particular, the aforesaid known seed sowing machine comprises, in general, a load-bearing structure, including at least one metallic supporting frame, provided with wheels and supporting said means for containing and distributing seeds, as well as furrower means and earthing up members.

Moreover, a seed sowing machine of the specified type is known, which also deposits on the ground a continuous mulching sheet and sows the seeds through said mulching sheet, which is made of a thin film of plastic material and covers the corresponding ridge of ground, i.e. the strip of land into which the seeds are sown. During sowing, holes are made in the mulching sheet by mechanical holing means, with which the seed sowing machine is provided, to allow the depositing of a respective seed through and below each hole.

The documents WO 2017/182997 A1 and EP 2 805 596 A1 disclose, respectively, a seeding method by means of a seed sowing machine connected to a tractor according to the preamble to claim 1.

The document US 4 117 787 A discloses a machine for performing cultivation under a plastic sheet, wherein there is a ploughshare to make a furrow in the ground, a support bearing a roll of plastic sheet, which is deposited in such a way that the sheet is positioned on the ground above the furrow, and means for perforating the sheet before positioning it on the ground, perforations being made in the sheet vertical to the burrow by a vertically movable punch.

However, the known seeding method and the related known sowing machine described above have some drawbacks, listed below.

First of all, the operation of holing the mulching sheet and the operation of depositing the seeds through the corresponding holes of the sheet are not carried out concurrently and this time lag can determine an incorrect alignment of each seed with respect to the corresponding hole in the sheet, with consequent possible damage for the seedling that will germinate from the seed.

The holing of the mulching sheet by the mechanical means uniquely determines the size of each hole obtained, in relation to the particular shape of the holing means. On the other hand, the size of the hole made in the mulching sheet should correspond to the size of the seed that is deposited into the furrow, to prevent incorrect growth of the corresponding seedling through hole in the sheet. Moreover, to change the size of the holes made in the mulching sheet, the mechanical holing means have to be replaced at least in part, depending on the type of seed to be deposited into the furrow. This operation is costly and laborious.

On the other hand, the mechanical means for holing the mulching sheet uniquely determine the distance between the holes made in the sheet and hence between the seeds deposited in the corresponding furrow and this distance can be modified only by replacing a part at said mechanical holing means.

It should also be noted that the known seeding method and related seed sowing machine of the type specified above do not allow to selectively change the density of the seeds (number of seeds per unit of surface area) deposited in relation to the type of ground in which the corresponding furrow is made.

The presence in the seed sowing machine of the mechanical means for holing the mulching sheet determines an undesired increase of the dimensions and of the weight of the machine.

Moreover, the known seeding method and related seed sowing machine of the type indicated above do not allow to carry out the application of fertilizing and/or disinfecting substances, through the mulching sheet, at each seed deposited in the related furrow. The present invention is intended to solve the aforesaid drawbacks.

A purpose of the present invention is to provide a seeding method and related seed sowing machine, which allow to selectively change the density of the seeds (number of seeds per unit of surface area) deposited in relation to the type of seed to be sown and to the characteristics of the ground in which the seed is deposited.

Another purpose of the present invention is to provide a seeding method and related seed sowing machine, which allow to carry out the operation of holing the mulching sheet and the operation of depositing the seeds in the furrow through the corresponding holes of the sheet in a substantially simultaneous manner.

Yet another purpose of the present invention is to provide a seeing method and related seed sowing machine, which allow to make holes in the mulching sheet, whose size is correctly adequate for the size of the seed that is deposited in the corresponding furrow, with no need to replace the means for holing the sheet, according to the type and/or to the size of the seed to be deposited in the furrow through the hole itself.

An additional purpose of the present invention is to provide a seeding method and related seed sowing machine, which allow to change the distance between the holes made in the mulching sheet and hence between the seeds deposited in the corresponding furrow, with no need for the total or partial replacement of said means for holing the mulching sheet.

Yet another purpose of the present invention is to provide a seeding method and related seed sowing machine, which allow to limit both the dimensions and the weight of the machine, in relation to the means for holing the mulching sheet and for depositing the seed in the corresponding furrow.

Still another purpose of the present invention is to provide a seeding method and related seed sowing machine, which allow to carry out the application of fertilizing and/or disinfecting substances at each seed deposited in the related furrow, in a precise and economic way.

In view of these purposes, the present invention provides a seeding method by means of a seed sowing machine connected to a tractor and comprising:
- at least one hopper for containing a mass of seeds and distribution and separating means of the seeds contained in said at least one hopper for sowing in at least one furrow in a portion of ground to be sown below said seed sowing machine, and
- furrower means that, during advance of the tractor on said portion of ground to be sown, form said at least one furrow, in which the seeds distributed and separated by means of said seed distribution and separating means are deposited, said method comprising the steps consisting of:
- providing in said seed sowing machine seed conveying means, to which the seeds distributed and separated by means of said seed distribution and separating means are delivered;
- providing in said seed sowing machine pneumatic means that produce and direct a compressed air flow through said seed conveying means;
- separately transporting each seed, coming from said seed distribution and separating means, by means of said compressed air flow, through said seed conveying means;
- providing in said seed sowing machine pneumatic ejection means of the seeds to be deposited, which are connected in an air-tight manner downstream with respect to said seed conveying means , according to the direction of said compressed air flow, and have an end part configured as seed ejection mouth;
- arranging said seed ejection mouth of said pneumatic ejection means above said at least one furrow;
- propelling and ejecting by means of said compressed air flow each seed, distributed and separated from said mass of seeds, through said ejection mouth of said pneumatic ejection means, forcefully into said at least one furrow, sowing a plurality of seeds sequentially in said at least one furrow.

Moreover, the sowing method according to the present invention is characterized by the steps consisting of:
- providing in said seed sowing machine means for unwinding and depositing a mulching sheet wherein, during advance of said tractor, at least one mulching sheet is unwound from at least one reel of mulching sheet, which is held on the ground by means of at least one free end area, arranged upstream of an initial end of said at least one furrow, according to the direction of advance of the tractor;
- arranging a portion of said mulching sheet, which is unwound from said at least one reel, below and close to said seed ejection mouth of said pneumatic ejection means and above said at least one furrow, on which the mulching sheet is superimposed;
- forming in said portion of said mulching sheet, which is deposited on the ground during advance of said tractor, a series of holes corresponding to said at least one furrow and produced by means of perforation of the sheet by seeds propelled forcefully in sequence through said ejection mouth of said pneumatic ejection means and which are deposited sequentially in said at least one furrow.

Furthermore, the sowing method according to the present invention is characterized by the steps consisting of:
- arranging said furrower means below said portion of said mulching sheet, which is unwound from said reel, and forming said at least one furrow in the ground, during advance of said tractor, by means of at least one furrowing member of said furrower means;
- providing said at least one furrowing member with a slot open toward the ground below;
- arranging said seed ejection mouth of said pneumatic ejection means above and at said slot;
- propelling each seed that is ejected from said ejection mouth, and which perforates said mulching sheet, depositing it in said at least one furrow through said slot.

Advantageously, the sowing method according to the present invention is characterized by the step consisting of arranging said ejection mouth of said pneumatic ejection means so as to propel each seed according to a direction essentially orthogonal with respect to an area of said portion of said mulching sheet below said ejection mouth. Said direction essentially orthogonal to a portion of sheet corresponds, for example, to the vertical direction with respect to the ground.

Moreover, the sowing method according to the present invention is characterized by the steps consisting of:
- providing fixing means of said seed ejection mouth of said pneumatic ejection means, configured to fix said ejection mouth in a plurality of different relative arrangements with respect to the direction vertical to the ground;
- fixing said ejection mouth of said pneumatic ejection means in a first arrangement of said plurality of different relative arrangements with respect to the vertical direction;
- propelling and ejecting seeds, forcefully and in sequence, through said ejection mouth of said pneumatic ejection means fixed in said first arrangement of said plurality of different relative arrangements with respect to the vertical direction, so as to form in a first portion of said mulching sheet, by means of the seeds that are deposited sequentially in said at least one furrow, first holes having a first hole shape / size;
- fixing said ejection mouth of said pneumatic ejection means in a second arrangement of said plurality of different relative arrangements with respect to the vertical direction;
- propelling and ejecting seeds, forcefully and in sequence, through said ejection mouth of said pneumatic ejection means fixed in said second arrangement of said plurality of different relative arrangements with respect to the vertical direction, so as to form in a second portion of said mulching sheet, by means of the seeds that are deposited sequentially in said at least one furrow, second holes having a second hole shape / size;
- comparing said first hole shape / size in said first portion of said mulching sheet with said second hole shape / size in said second portion of said mulching sheet and operatively fixing said ejection mouth of said pneumatic ejection means in said first operating arrangement or in said second operating arrangement according to the hole shape / size considered most suitable for the subsequent development into plants of the seeds deposited in said at least one furrow.

Advantageously, the sowing method comprises the steps consisting of:
- providing first electric motor means configured to actuate said seed distribution and separating means and operatively to connect said first electric motor means with respect to first electronic means for controlling the rotational speed of said first electric motor means;

- providing second electric motor means configured to actuate said pneumatic means and operatively to connect said second electric motor means with respect to second electronic means for controlling the rotational speed of said second electric motor means;
- operatively connecting said first electronic control means and said second electronic control means with respect to an electronic processing and calculating unit, wherein hardware and software means are configured to determine the optimal value of the distribution density of the seeds in said at least one furrow, in relation to the type of seed to be sown and to the morphological and composition characteristics of the ground;
- computing by means of said electronic processing and calculating unit, during the sowing, values of the rotational velocities of said first electric motor means and of said second electric motor means compatible with said optimal value of the distribution density of the seeds in said at least one furrow;
- applying, during the sowing and by means of said electronic processing and calculating unit, the values of the rotational velocity of said first electric motor means and of said second electric motor means - computed by means of said electronic processing and calculating unit - to said first electronic means for controlling the rotational velocity of said first electric motor means and to said second electronic means for controlling the rotational velocity of said second electric motor means, so as to control the distribution and separation of the seeds and of the pneumatic ejection of the seeds by functional coordination of said seed distribution and separating means and of said pneumatic seed ejection means.

Moreover, the sowing method according to the present invention is characterized by the steps consisting of:
- operatively connecting said electronic processing and calculating unit with respect to earth geolocation means and/or with respect to a database in a remote server, respectively in memory means operatively connected to said processing and calculating unit;
- acquiring by means of said electronic processing and calculating unit, from said earth geolocation means and/or from said database, data useful for determining the optimal distribution density of the seeds in said at least one furrow;
- computing by means of said electronic processing and calculating unit said values of the rotational velocities of said first electric motor means and of said second electric motor means based on said data useful for calculating the optimal value of the distribution density of the seeds in said at least one furrow.

Advantageously, the sowing method according to the present invention is characterized by the steps consisting of:
- providing distributor means of at least one fertilizing and/or disinfecting substance configured to deposit in said at least one furrow at least one fertilizing and/or disinfecting substance under said mulching sheet and upstream, in the direction of advance of the tractor, of said seed ejection mouth;
- depositing in said at least one furrow, during advance of the tractor, said at least one fertilizing and/or disinfecting substance by means of said distributor means.

The sowing method according to the present invention is characterized also by the steps consisting of:
- providing said seed distribution and separating means with a suction chamber, having a seed outlet through gravity;
- providing, downstream of said outlet, Venturi tube means arranged upstream of said seed conveying means;
- passing said compressed air flow through said Venturi tube means toward and through said seed conveying means.

Other features and advantages of the invention are readily apparent from the following detailed description of an embodiment of the seed sowing machine according to the invention with reference to the drawing, which shows important details for the invention, as well as from the claims.

The features illustrated herein should not necessarily be understood to be in scale and they are represented so that the peculiarities according to the invention are clearly highlighted.

In the drawing:
- figure 1 is a side elevation view of the seed sowing machine according to an exemplifying embodiment of the present invention;
- figure 2 is a plan view of the seed sowing machine in the direction of the arrow II of figure 1 (for simplicity of illustration, this figure only shows one half of the seed sowing machine with respect to the median vertical longitudinal plane of the seed sowing machine);
- figure 3 is a detailed view, with parts interrupted and with greater scale of furrower means and pneumatic seed ejection means of the seed sowing machine of figure 1;
- figure 4 is a plan top view in the direction of the arrow IV of figure 3;
- figure 5 is a partial schematic side elevation view of the means for containing, separating, distributing and pneumatically ejecting seeds of the seed sowing machine of figure 1 and of the furrower means of figure 3, in a different scale and in operation during the sowing;
- figure 6 is a similar view to that of figure 3, but in which are also illustrated means for applying fertilizing and/or disinfecting substances, below the mulching sheet, at each seed deposited in the related furrow.

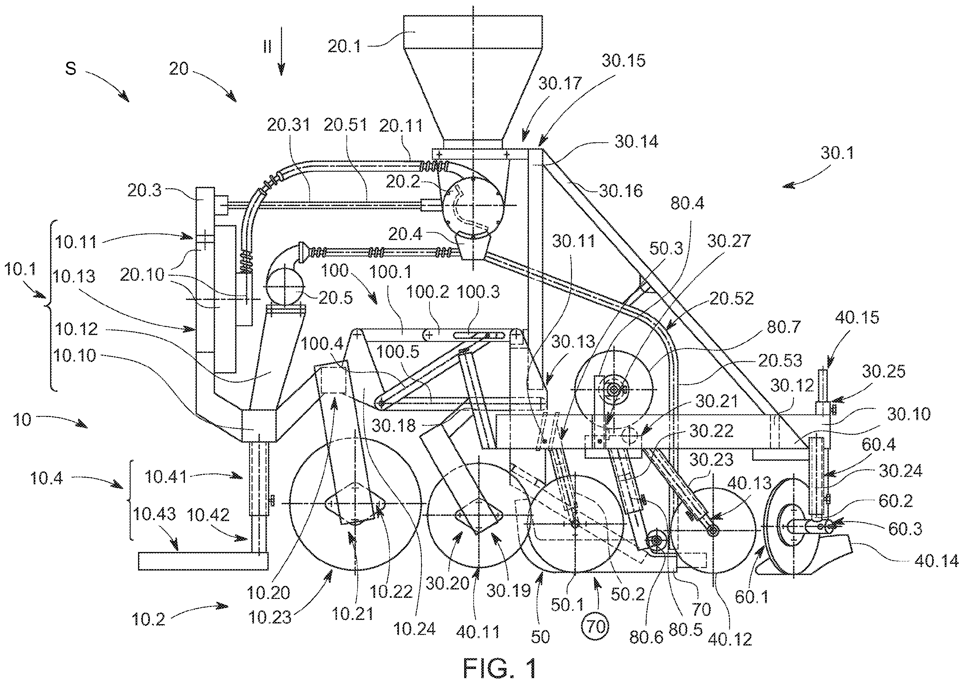

With reference to the drawing, the seed sowing machine according to present embodiment of the invention is indicated as a whole with the reference S (fig. 1).

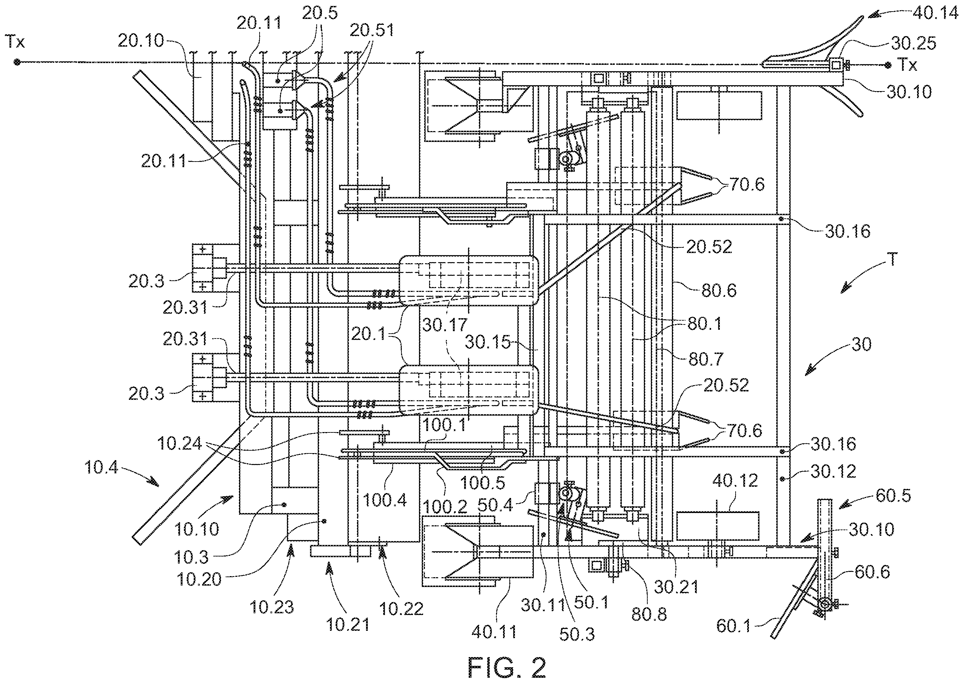

Said seed sowing machine S is provided for the concurrent distribution of seeds along two ridges located side by side and, in each ridge, along two parallel furrows. In figure 2, for simplicity of illustration, only one half of the seed sowing machine S is shown, operatively corresponding to a ridge of ground to be sown.

In particular, the seed sowing machine S comprises a load-bearing structure connected to and towed by a tractor (not shown) and which includes two combined supporting metal frames T, substantially horizontal and each corresponding to a respective ridge (of said two frames T only one is shown in figure 2). Said two combined frames T are substantially symmetrical with respect to a median vertical longitudinal plane, identified by the tracing line Tx-Tx in figure 2. Each chassis T comprises multiple chassis assemblies and supports two automatic seed distribution units D. The following description is made with reference to only one chassis T of the seed sowing machine S.

In particular, each chassis T comprises substantially:
- a front chassis assembly 10;
- a rear chassis assembly 30;
- an intermediate assembly 100, for the articulated connection of said front chassis assembly 10 and of said rear chassis assembly 30.

Said front chassis assembly 10 comprises:
- first front support means 10.1, including:
   - a first transverse horizontal metallic beam 10.10, for example with square section;
   - a pair of vertical rising metallic support arms 10.11, fixed to said first beam 10.10, distanced from each other and arranged in an intermediate position along said first beam;
   - a vertical rising metallic support arm 10.12, fixed to said first beam 10.10 and proximate to said median vertical plane Tx-Tx;
   - a vertical rising metallic support arm 10.13, fixed to said first beam 10.10 and located behind said support arm 10.12;
- second rear support means 10.2, including:
   - a second transverse horizontal metallic beam 10.20, for example with square section, located behind and raised with respect to said first transverse beam 10.10;
   - a pair of descending metallic support arms 10.21, fixed, at one end, in respective opposite end areas of said second beam 10.20 and slightly inclined in backward direction;
   - hub and bearing means 10.22, fixed at the other end of each of said metallic support arms 10.21 coaxial to each other according to a common transverse axis;
   - leveler / compactor metal roller means 10.23, whose axis is supported rotating by said hub and bearing means 10.22 and whose outer cylindrical surface is arranged in contact with the ground;
   - two pairs of vertical rising support plates 10.24, fixed in intermediate position with respect to said second metal beam 10.20 in which each pair of plates 10.24 forms a respective fork support;
   - a pair of longitudinal metallic arms 10.3, fixed with respect to said first metal beam 10.10 and to said second metal beam 10.20, and which rigidly connect the beams themselves (said arms 10.3 are realized by respective metallic sectional elements);
- a ground levelling unit 10.4, forward with respect to said first beam 10.10 and including:
   - a vertical descending prismatic tubular metallic support 10.41, fixed in an intermediate position of said first beam 10.10, formed by a metallic sectional element having at least one threaded through hole with horizontal axis, in which a corresponding pressure screw is engaged;
   - a prismatic metallic stem 10.42 coupled by telescopic sliding with one of its ends in said tubular support 10.41 and divisibly fixed with respect thereto in a plurality of extended positions by means of said pressure screw;
   - an essentially transverse metallic levelling blade 10.43, fixed to the free end of said prismatic stem 10.42 and arranged in contact with the ground. In particular, said blade 10.43 is formed by a metallic sectional element.

Said rear chassis assembly 30 comprises:
- a horizontal load-bearing framework 30.1, including:
   - two parallel horizontal metallic spars 30.10, substantially aligned each with a respective end of said first transverse horizontal metal beam 10.10 and distanced in longitudinal direction with respect to said first beam; said spars being realized by respective metallic sectional elements;
   - a front metallic crossbeam 30.11 that rigidly connects the front ends of said spars 30.10; said front metallic crossbeam 30.11 being realized by respective metallic sectional element;
   - a rear metallic crossbeam 30.12 that rigidly connects the rear ends of said spars 30.10; said rear metallic crossbeam 30.12 being realized by respective metallic sectional element;
   - two pairs of metallic vertical rising support plates 30.13, fixed in intermediate position with respect to said front metallic crossbeam 30.11, in which each pair of plates 30.13 forms a respective fork support;
   - a pair of metallic vertical support rods 30.14, rising and fixed, each, with respect to a corresponding inner vertical plate of the pair of plates 30.13. Said rods 30.14 are rigidly connected at their free ends by an upper metallic crossbeam 30.15;
   - a pair of metallic struts 30.16, each of which rigidly connects the free end of one of the metal rods 30.14 with said rear metallic crossbeam 30.12. Each strut 30.16 is realized by a metallic sectional element;
   - a pair of longitudinal horizontal metallic arms 30.17 fixed and projecting anteriorly with respect to said upper metallic crossbeam 30.15. Said arms 30.17 are distanced from each other and they are realized by a respective metallic sectional element;
   - a pair of prismatic tubular metallic bodies 30.18, in which respective metallic nut screws (not shown) are slidably coupled. Said tubular bodies 30.18 are fixed at the respective front ends of said spars 30.10, the axes of said nut screws being contained in respective planes vertical and inclined with respect to the horizontal plane, according to an acute angle with respect to the corresponding spar 30.10. It will be noted that each tubular body 30.18 anteriorly has a respective slot extended for a substantial part of the body itself. A corresponding lead screw (not shown) is engaged with respect to each nut screw, while a control handwheel, fixed to said screw, projects with respect to the top of each prismatic body 30.18;
   - a pair of descending metallic support arms 30.19, substantially shaped as an upside down "L" (seen in elevation), in which a first branch of each of said arms 30.19 is rigidly fixed to a respective nut screw through the slot of a respective tubular body 30.18. Said supporting arms 30.19 are realized by metallic sectional elements. Each arm 30.19 supports at the free lower end of the other branch a respective fork, whose opposite branches have a pair of opposite through holes with transverse horizontal axis;
- respective hub and bearing means 30.20, fixed at the free lower end of the other branch of each of said metallic support arms 30.19, in said opposite holes, in which said hub and mearing means 30.20 are coaxial to each other according to a common transverse axis;
- a pair of metallic support brackets 30.21 opposite and fixed on the inner faces and in intermediate position of said spars 30.10, shaped substantially as a "U" open upwards (in plan view). Said opposite brackets 30.21 form respective horizontal support brackets;
- a pair of descending inclined metallic prismatic tubular supports 30.22, opposite and fixed each in an intermediate position of said spars 30.10. Each of said supports 30.22 is formed by a metallic sectional element having at least one threaded through hole with horizontal axis, in which a corresponding pressure screw is engaged;
- a pair of descending inclined metallic prismatic tubular supports 30.23, opposite and fixed each in an intermediate position of said spars 30.10 and positioned behind said supports 30.22. Each of said supports 30.23 is formed by a metallic sectional element having at least one threaded through hole in a lateral wall, in which a corresponding pressure screw is engaged;
- a metallic cylindrical tubular support 30.24 with descending vertical axis, fixed in proximity to the rear end of the spar 30.10 external with respect to the load-bearing structure to two combined support chassis T. Said support 30.24 is formed by a metallic sectional element having at least one threaded through hole with orthogonal axis, in which a corresponding pressure screw is engaged;
- a vertical descending metallic prismatic tubular support 30.25, fixed in proximity to the rear end of a spar 30.10 internal with respect to the load-bearing structure to two combined support chassis T. Said support 30.25 is formed by a metallic sectional element having at least one threaded through hole in one of its lateral walls, in which a corresponding pressure screw is engaged.

Said intermediate assembly 100, for articulated connection comprises:
- two pairs of metallic rectilinear rods 100.1, 100.5 positioned in respective longitudinal vertical planes and articulated at their ends, by respective pivots with horizontal axes, between respective fork supports 10.24 (fixed to said second metal beam 10.20 of the front chassis assembly) and 30.13 (fixed to said front metallic crossbeam 30.11 of the rear chassis assembly). In particular, the articulated rods 100.1, 100.5 of each pair are mutually parallel, superposed and distanced in a same vertical plane and form, with the respective fixed fork supports 10.24 and 30.13, a corresponding articulated parallelogram, in which said rods 100.1, 100.5 are movable in oscillation in said vertical plane maintaining mutual parallelism, forming a corresponding hinge articulation between said front chassis assembly 10 and said rear chassis assembly 30;
   - oscillation limiting means of each pair of articulated rods 100.1, 100.5, including:
      - a fixed shaped rod 100.2, fixed in parallel and distanced arrangement with respect to a first rod, i.e. the rod 100.1, of said two parallel articulated rods and having a slot 100.3 with greater axis parallel to the rod 100.2;
      - an additional rectilinear rod 100.4 articulated by means of an articulation pivot pin fixed to the other rod, i.e. the rod 100.5, of said two parallel articulated rods and having a fixed pivot pin with horizontal axis engaged in said slot 100.3 of said fixed rod 100.2, in which the amplitude of oscillation of each pair of articulated rods 100.1, 100.5 is determined by the length of the relative travel of said rod 100.2 and of said fixed pivot pin within said slot 100.3.

The seed sowing machine S further comprises:
- means 40 for translating said pair of combined supporting metal chassis T, including for each chassis T:
   - a pair of front rubber wheels 40.11 coaxial with respect to a transverse common axis and each connected, in a freely rotatable way, with respect to hub and bearing means 30.20, fixed at the other end of a respective one of said metallic support arms 30.19. Said rubber wheels 40.11 are adjustable in height by means of the respective connecting system with screw / nut screw and handwheel provided in the corresponding tubular body 30.18;
   - a pair of rear rubber wheel 40.12 coaxial with respect to a transverse common axis and each connected with respect to a corresponding descending inclined metallic tubular prismatic support 30.23. In particular, each rear rubber wheel 40.12 is connected, through respective hub and bearing means, to a metallic tubular prismatic stem 40.13, engaging in a telescopically sliding way within a corresponding one of said metallic tubular prismatic supports 30.23 and fixed with respect to the support by means of said pressure screw;
- first earthing up means 40.14, including:
   - a rear earthing up member 40.14, sliding, which is intermediate between said two chassis T, is shaped with double moldboard (symmetrical with respect to said plane Tx-Tx) and it is connected with respect to said metallic tubular prismatic support 30.25 by means of a metallic tubular prismatic stem 40.15, connected in a telescopically sliding way and fixed with respect to the support by means of said pressure screw;
- second front earthing up means 50, including:
   - a pair of front metallic earthing up discs 50.1 arranged, within each chassis T, in proximity to a respective spar 30.10 and in contact with the ground, including:
   - a pair of metallic cylindrical stems 50.2, which support at one end a respective bushing with axis orthogonal to that of the stem and in which is inserted a corresponding pivot pin fixed to a respective disc 50.1;
   - a pair of metallic tubular cylindrical support 50.3, one for each disc 50.1, descending and inclined with respect to the horizontal plane. In each of said supports 50.3 is housed with telescopic sliding the other end of a respective metallic cylindrical stem 50.2;
   - a pair of divisible attachments 50.4 (one for each disc 50.1) each fixed to the upper end of a respective tubular support 50.3 and which are divisibly fixed with respect to the upper metallic crossbeam 30.15;
- third rear earthing up means 60, including:
- a rear metallic earthing up disc 60.1 arranged, externally to the outer spar 30.10 of each chassis T, at the rear end thereof and in contact with the ground;
   - a metallic cylindrical stem 60.2, supporting at one end a respective bushing 60.3 with axis orthogonal to that of the stem and in which is inserted a corresponding pivot pin fixed to said disc 60.1. It will be noted that said bushing has radial pressure screw means which act on said pivot pin, fixing it in different relative position with respect to the bushing;
- a metallic tubular cylindrical support 60.4, descending vertical, in which is housed with telescopic sliding the other end of said metallic cylindrical stem 60.2;
- a transverse metallic tubular prismatic guide 60.5, fixed with respect to the rear end of said outer spar 30.10 and in which is housed, with telescopic sliding, a corresponding slider 60.6 fixed radially to the other end of said metallic cylindrical stem 60.2.

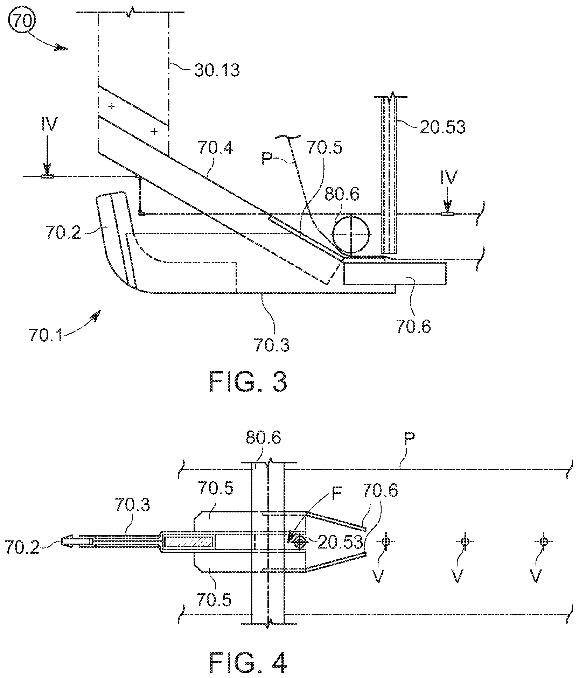

The seed sowing machine S also comprises furrower means 70 comprising (figures 3, 4):
- a pair of furrower members 70.1 (one for each furrow to be traced) including a metallic body 70.3, configured as a blade for forming the furrow with front end 70.2 with round tip and emerging vertically with respect to the furrow;
- a pair of union rod 70.4, inclined and fixed respectively in the rear area of the body 70.3 and, superiorly, with respect to a corresponding fork support 30.13 of the load-bearing framework 30.1 of the chassis assembly 30. Each union rod 70.4 is formed by a respective metallic sectional element;
- a pair of first metallic strips 70.5, fixed laterally by sides opposite with respect to the rear end area of the body 70.3 of each furrowing member 70.1, having a first inclined slide segment and a second substantially horizontal rear segment (positioned in a plane substantially parallel to the ground) and extended beyond the end of the body 70.3. Said first strips 70.5 form a track progressing, first, as a downwards descending ramp and, then, with flat progress and with rear end positioned substantially at the level of the ground. Between said strips 70.5 and through said body 70.3 is provided a slot F open towards the ground below;
- a pair of second metallic strips 70.6 for each furrowing member 70.1, fixed laterally, at opposite sides and below with respect to the rear end of said first strips 70.5. Said strips 70.6 progress in a mutually converging way towards a free rear end thereof, are positioned slightly below the level of the ground (when the furrowing member 70.1 traces the furrow) and re-close at least partially the ground open in a furrow by the front end 70.2 and by the body 70.3 of the furrowing member 70.1.

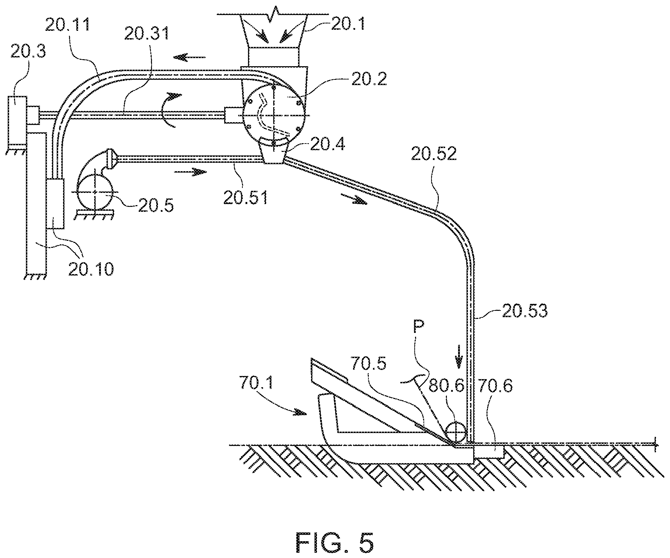

Said seed sowing machine S further comprises means 80 for applying a mulching sheet P on the ground, comprising:
- a pair of transverse idle rollers 80.1 (fig. 2), having equal outer diameter and respective horizontal parallel axes in a same horizontal plane and mounted freely rotating with respect to said horizontal support brackets 30.21 between said spars 30.10. Each transverse roller 80.1 is realized by a respective metallic tubular body having at the ends respective metallic axial pivot pins, housed in corresponding seats provided in said support brackets 30.21. Said transverse rollers 80.1 have coplanar axes and distance between their cylindrical surfaces;
- a pair of metallic prismatic tubular supports 30.27 (fig. 1), vertical, opposite, fixed respectively on the outer lateral faces of said spars 30.10, each in proximity to a respective horizontal support bracket 30.21;
- a pair of metallic prismatic tubular rods 80.4, one end whereof is housed, respectively, in a corresponding one of said tubular supports 30.27 in telescopic housing and whose other end, elevated above the corresponding spar 30.10, has a bushing support 80.8, for example made of Teflon(R). The two bushing supports 80.8 borne by said rods 80.4 are mutually aligned according to a common transverse axis;
- said pair of descending inclined metallic prismatic tubular supports 30.22 (fig. 1), fixed respectively to said spars 30.10, each in proximity to a respective horizontal support bracket 30.21;
- a pair of metallic prismatic tubular rods 80.5, one end whereof is housed, respectively, in a corresponding one of said descending tubular supports 30.22 in telescopic housing and whose other end, extended below the corresponding spar 30.10, has a bushing support 80.8, for example made of Teflon(R). The two bushing supports borne by said rods 80.5 are mutually aligned according to a common transverse axis;
- a transverse roller 80.6 (figure 1, 5) provided with axial pivot pins mounted idle in said bushing supports of said descending rods 80.5 and positioned in proximity to said ramp tracks of the furrower members 70.1;
- a reel 80.7 (fig. 1) of mulching sheet P made of plastic film mounted by means of a transverse support shaft, whose free ends are housed rotationally inside said two bushing supports 80.8 borne by said rods 80.4.

Said seed sowing machine S further comprises a seed containment, distribution and separation assembly 20, comprising:
- a seed containment, distribution, separation and deposition unit including:
   - a pair of hoppers 20.1 (figures 1, 2), each supported by a respective horizontal metallic arm 30.17 fixed with respect to said upper metallic crossbeam 30.15. Each hopper 20.1 feeds the seeds contained therein sequentially and individually by suction in an underlying suction chamber 20.2;
   - a suction unit 20.10 (figures 1, 5), wherein a suction means is controlled by the power take-off of the tractor: Said suction unit 20.10 is supported fixed by means of said metallic support arms 10.13 fixed to said first beam 10.10, and pneumatically connected, by two flexible tubes 20.11, with said respective suction chamber 20.2 underlying each hopper 20.1. In said suction chamber 20.2 the seeds are suctioned, from said hopper 20.1, against a plurality of through holes provided in a rotating disc with horizontal axis and they are individually and sequentially released by gravity downwards, at a lower outlet of said suction chamber 20.2, which outlet is not in a vacuum. According to the invention, said assembly 20 comprises:
- electric gearmotor means 20.3 (figures 1, 5), one for each hopper 20.1, fixed with respect to said metallic support arms 10.11 fixed to said first beam 10.10, and whose output shaft is kinematically connected, by means of a respective transmission shaft 20.31, with respect to said rotating disc of a corresponding suction chamber 20.2;
- a seed deposition unit, including:
   - conveyor means 20.4 (figures 1, 5), configured as a funnel, each underlying a respective lower outlet of said suction chamber 20.2;
   - pneumatic compressor means 20.5, one for each hopper 20.1, actuated by respective electric gearmotor means and whose output of pressurized air is pneumatically connected, by means of a first respective flexible tube 20.51, with a pressurized air inlet of corresponding conveyor means 20.4, which inlet is positioned upstream of said lower outlet of said suction chamber 20.2;
   - a second respective rigid tube 20.52, pneumatically branched from an outlet of pressurized air of said corresponding conveyor means 20.4, which output is positioned downstream of said lower outlet of said same suction chamber 20.2 and in which said second respective rigid tube 20.52 has a lower free end segment 20.53 positioned with essentially vertical axis at and in proximity to said slot F provided between said strips 70.5 and in said body 70.3 of said furrowing member 70.1 (it will be noted that said free end segment 20.53 of each tube 20.52 provides pneumatic ejection means of the seeds, through its end portion or ejection mouth);
   - Venturi tube means provided in each suction chamber 20.2 downstream of said lower outlet of said suction chamber 20.2, according to the direction of the flow of compressed air.

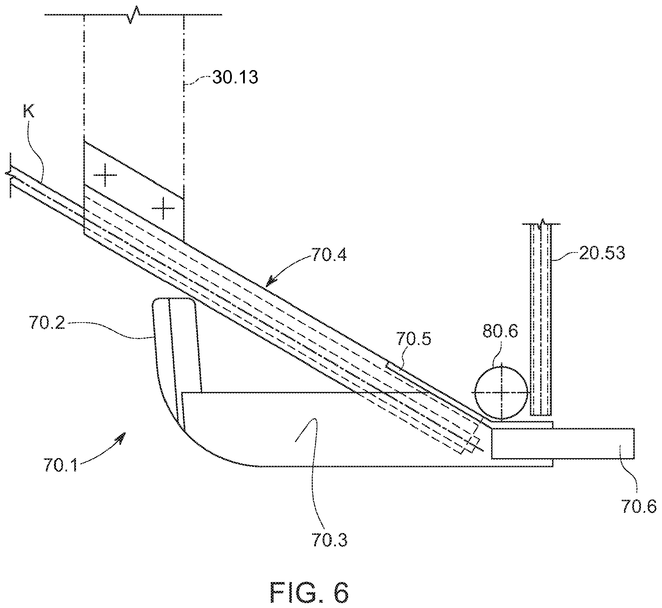

The seed sowing machine S further comprises distributor means of fertilizing and/or disinfecting substances (indicated by the reference K in figure 6), which are deposited in the furrow formed concurrently with the deposition of the seed.

Said distributor means K comprise a channel, for example a tube made of plastic material, sustained with respect to the support plates 30.13 of the rear chassis assembly 30. Said channel K has a lower free end with downwards inclined progress and positioned in proximity to said slot F (provided in the furrowing member 70.1) below said roller 80.6 (and hence below the mulching sheet P) and upstream (in the advancement direction) of the free lower end of the pneumatic ejection means 20.53.

### Operation of the seed sowing machine S.

### Preliminary settings of the seed sowing machine:

- the seed sowing machine is connected, anteriorly, for towing with respect to a forward tractor, by means of attachment means (not shown) of the front chassis assemblies 10 of the two combined chassis T, and it is positioned on a field at the initial part of two ridges positioned side by side, with the front rubber wheels 40.11 and the rear rubber wheels 40.12 of the two combined chassis T positioned at the two parts of a respective ridge (hereafter, reference will be made to only one chassis T and to the related individual ridge of ground);
- acting on the handwheels associated to the lead screws positioned in the prismatic bodies 30.18, the distance of the rear chassis assembly 30 from the ground is regulated and in that way the depth of penetration of the furrowing members 70.1 is regulated (it will be noted that a rear chassis assembly 30 of each chassis T is limitedly movable in the vertical direction with respect to the front chassis assembly 10 by means of the intermediate articulated connection assembly 100; it will further be noted that the furrowing members 70.1 sink in the ground until positioning the rear end of the corresponding ramp track formed by the strips 70.5 substantially at the level of the ground);
- the hoppers 20.1 are filled with seeds;
- a new reel 80.7 of mulching sheet is set on the two side by side transverse rollers 80.1, which support it rotationally with its shaft, whose free ends are housed in the two bushing supports borne by said rods 80.4; the free end of the mulching sheet P is unwound from the reel 80.7, it is made to pass below the transverse roller 80.6 (figures 5, 6), above the ramp track formed by the strips 70.5 of the two furrowing members 70.1, and below the respective end or ejection mouth of the pneumatic ejection means 20.53 of the seeds;
- said free end of the sheet P is deployed transversely along said roller 80.6, it is further unwound and it is then set down on the initial end area of the respective ridge, where it is made stationary by superposition of backfill along its transverse edge and along initial segments of its longitudinal edges.

### Operation of the seed sowing machine S

The operator starts the engine of the tractor, which advances towing the seed sowing machine S with the two combined chassis T positioned each at a respective ridge of ground, starting from a respective initial end of each ridge of ground.

The power take-off (not shown) of the tractor imparts motion to the suction device of the suction unit 20.10, which determines, through the flexible tube 20.11, a vacuum in the suction chamber 20.2 associated with each hopper 20.1.

The operator puts into operation the electric gearmotor 20.3, which make the shaft 20.31 rotate and hence the disc of the suction unit 20.2 associated with each hopper 20.1. The seeds are drawn are separated from each hopper 20.1 and they are sequentially released at the lower outlet of the respective suction chamber 20.2.

The operator puts into operation the compressor 20.5 which produces a flow of compressed air that travels through each flexible tube 20.51 towards the conveyor means 20.4 associated with each hopper 20.1, according to a direction substantially contrary (in this example) to the direction of advance of the tractor.

The flow of compressed air arrives in the conveyor means 20.4 associated with each hopper 20.1 and continues through the corresponding Venturi tube means. Said flow of forced air invests each separated seed, received in said conveyor means 20.4, and it forcedly conveys said seed along the corresponding rigid tube 20.52 and the subsequent segment of vertical terminal tube 20.53, i.e. along the pneumatic ejection means 20.53. A continuous succession of separated seeds is forcedly driven to travel through said path and each seed is sequentially forcedly ejected from the free end or ejection mouth of said pneumatic ejection means 20.53 against the mulching sheet P according to a substantially orthogonal trajectory with respect to the sheet P itself and vertical with respect to the surface of the ground below.

In the meantime, the mulching sheet P that is unwound from the reel 80.7 is progressively deployed on the ground, by means of the transverse roller 80.6, passing in position immediately underlying said pneumatic ejection means 20.53 and above the slot F provided in the furrowing member 70.1.

It will be noted that, at said slot F of the furrowing member 70.1, the portion of mulching sheet P is deployed at the rear horizontal segment of the two strips 70.5 of said furrowing member 70.1. Said strips 70.5 then provide, for said portion of the sheet P, respective contrast surfaces, planar and essentially horizontal during the holing of the sheet. Simultaneously, each furrowing member 70.1, which is positioned ahead (in the direction of advance) of the respective pneumatic ejection means 20.53, forms a corresponding furrow in the ground, below the mulching sheet P, so that each seed, which is forced to follow a vertical trajectory along said segment of vertical tube of the pneumatic ejection means 20.53, perforates the sheet P and penetrates in the furrow that was just traced by the respective furrowing member 70.1. Subsequently, following the advance of the seed sowing machine, arrive the second strips 70.6 of each furrowing member 70.1, which re-close at least partially, with backfill soil, the furrow opened by the furrowing member 70.1, covering each deposited seed.

As is understood from the above, each seed ejected by the pneumatic ejection means 20.53, forcefully, perforates the sheet P according to a trajectory essentially perpendicular to the respective portion of sheet P, producing in the sheet a hole substantially corresponding, dimensionally, to the size of the seed. Moreover, the seed continues its essentially vertical trajectory into the corresponding furrow, on which is deposited the mulching sheet P, and said seed is then positioned, in substantially vertical correspondence (given the velocity of ejection of the seed) with the hole made by it in the sheet P. The actions of perforating the sheet P by the seed and of depositing the seed itself in the corresponding furrow are substantially concurrent. In additional, the vertical alignment is realized between seed and corresponding hole made in the mulching sheet P positioned to cover the related furrow, which allows the seedling that sprouts from the seed to develop through said hole, without finding any obstacle in the mulching sheet P.

During the deposition of each seed in the corresponding furrow traced by the furrowing member 70.1, a flow of fertilizing and/or disinfecting substance coming from the channel K is deposited in the furrow, upstream of the seed that is about to be deposited.

Note that, in the seed sowing machine S, the seed deposition system is independent of the power take-off, to which the seed sowing machine is connected.

Taking the above into account, the characteristics aspects of the present invention are summarized as follows.

The object of the invention is a seed sowing machine S connected to a tractor and comprising:
- at least one hopper 20.1 for containing a mass of seeds and distribution and separating means 20.2 of the seeds contained in said at least one hopper for sowing in at least one furrow in a portion of ground to be sown below said seed sowing machine S, and
- furrower means 70 that, during advance of the tractor on said portion of ground to be sown, form said at least one furrow, in which the seeds distributed and separated by means of said seed distribution and separating means 20.2 are deposited, said seed sowing machine S being characterized in that it comprises:
- seed conveying means (20.4, 20.52), to which the seeds distributed and separated by means of said seed distribution and separating means (20.2) are delivered;
- pneumatic means (20.5, 20.51) that produce and direct a compressed air flow along said seed conveying means (20.4, 20.52), said compressed air flow separately transporting each seed, coming from said seed distribution and separating means (20.2), along said seed conveying means (20.4, 20.52);
- pneumatic ejection means 20.53 of the seeds to be deposited, which are connected in an air-tight manner downstream with respect to said seed conveying means 20.4, 20.52, according to the direction of said compressed air flow, and have an end part configured as seed ejection mouth arranged over said at least one furrow;
   and in that each seed, distributed and separated from said mass of seeds, is propelled and ejected by means of said compressed air flow through said ejection mouth of said pneumatic ejection means 20.53, forcefully into said at least one furrow.

Moreover, the seed sowing machine S is characterized in that it comprises:
- means for supporting, unwinding and depositing a mulching sheet P wound in at least one reel 80.7, wherein, during advance of said tractor S, at least one mulching sheet P is unwound from at least one reel 80.7, which is held on the ground by means of at least one free end area, arranged upstream of an initial end of said at least one furrow, according to the direction of advance of the tractor, and
- a portion of said mulching sheet P, which is unwound from said at least one reel 80.7, arranged below and close to said seed ejection mouth of said pneumatic ejection means 20.53 and above said at least one furrow, on which the mulching sheet P is superimposed;
and in that the portion of said mulching sheet P, which is deposited on the ground during advance of said tractor, has a series of holes V corresponding to said at least one furrow and produced by means of perforation of the sheet P by seeds propelled forcefully and in sequence through said ejection mouth of said pneumatic ejection means 20.53 and which are deposited sequentially in said at least one furrow.

On the other hand, the seed sowing machine S is characterized in that said at least one reel 80.7 of mulching sheet P is supported rotating about an axis transverse with respect to the direction of advance of the tractor;
and in that at least one rotating guide roller 80.6 of said mulching sheet P, having an axis essentially parallel to that of said reel 80.7, is arranged at the front, in the direction of advance of the tractor, and close to said ejection mouth of said pneumatic ejection means 20.53, holds said mulching sheet P substantially taut, during unwinding from said reel 80.7, and guides said mulching sheet P to be arranged below said ejection mouth and close to the surface of the ground on which the mulching sheet P is superimposed.

Moreover, the seed sowing machine S is characterized in that:
- said furrower means 70 are arranged below said portion of said mulching sheet P, which is unwound from said reel 80.7, and comprise at least one furrowing member 70.1, 70.5, which forms said at least one furrow in the ground, during advance of said tractor;
- said at least one furrowing member 70.1, 70.5 has a slot F open toward the ground below;
- said seed ejection mouth of said pneumatic ejection means 20.53 is arranged above and at said slot F, and
in that each seed that is ejected from said ejection mouth and perforates said mulching sheet P is deposited in said at least one furrow through said slot F.

It will be noted that the seed sowing machine S is also characterized in that said ejection mouth of said pneumatic ejection means 20.53 is configured and arranged to propel each seed according to a direction essentially orthogonal with respect to an area of said portion of said mulching sheet P below said ejection mouth.

On the other hand, the seed sowing machine S is characterized in that it comprises fixing means of said seed ejection mouth of said pneumatic ejection means 20.53 configured to selectively fix said ejection mouth in a plurality of different relative arrangements with respect to the direction vertical to the ground.

It is pointed out that the seed sowing machine S is characterized in that it comprises:
- first electric motor means 20.3 configured to actuate said seed distribution and separating means 20.2 and first electronic means for controlling the rotational speed of said first electric motor means 20.3 operatively connected to said electric motor means 20.3;
- second electric motor means configured to actuate said pneumatic means 20.5, 20.51 and second electronic means for controlling the rotational speed of said second electric motor means operatively connected to said second electric motor means;
- an electronic processing and calculating unit operatively connected with respect to said first electronic control means and to said second electronic control means and wherein hardware means and software means are configured to determine the optimal value of the distribution density of the seeds in said at least one furrow (number of seeds per unit of surface area), in relation to the type of seed to be sown and to the morphological and composition characteristics of the ground;
and in that said electronic processing and calculating unit processes, during the sowing, the values of the rotational speed of said first electric motor means and of said second electric motor means, compatible with said optimal value of the distribution density of the seeds in said at least one furrow, and applies said values of the rotational speed of said first electric motor means and of said second electric motor means to said first electronic means for controlling the rotational velocity of said first electric motor means 20.3 and to said second electronic means for controlling the rotational speed of said second electric motor means.

Moreover, the seed sowing machine S is characterized in that said electronic processing and calculating unit is operatively connected with respect to earth geolocation means and/or with respect to a database in a remote server, respectively in memory means of said processing and calculating unit, and in that said electronic processing and calculating unit acquires, by means of said earth geolocation means and/or said database, data useful for determining the optimal distribution density of the seed in said at least one furrow and it processes said values of the rotational speed of said first electric motor means and of said second electric motor means on the basis of said useful data for calculating the optimal value of the distribution density of the seeds in said at least one furrow.

On the other hand, the seed sowing machine S is characterized in that it comprises:
- a front chassis assembly 10, essentially horizontal and connected with respect to the tractor;
- a rear chassis assembly 30, essentially horizontal and which supports at least said furrower means 70, comprising said at least one furrowing member 70.1, 70.5 fixed with respect to said chassis assembly 30, and
- an intermediate assembly 100, configured for the articulated connection of said front chassis assembly 10 and of said rear chassis assembly 30,
and in that said rear chassis assembly 30 is supported by means of a plurality of wheels 40.11, 40.12, which rest on the ground and rotate with respect to axes transverse to the direction of advance of the tractor, and comprises selective height adjustment means 30.18, 30.23, 40.13 of said chassis assembly 30 with respect to the axes of said wheels, wherein the relative distance of said rear chassis assembly 30 from the surface of the ground to be sown and correspondingly the depth of penetration into the ground of said at least one furrowing member 70.1, 70.5 during advance of the tractor, are selectively adjusted by means of said selective height adjustment means 30.18, 30.23, 40.13.

Moreover, the seed sowing machine S is characterized in that said at least one furrowing member 70.1, 70.5 comprises means for at least partially covering over said at least one furrow formed during advance of the tractor.

Advantageously, the seed sowing machine S is characterized in that it comprises distributor means K of at least one fertilizing and/or disinfecting substance associated with said furrower means 70 and configured to deposit in said at least one furrow at least one fertilizing and/or disinfecting substance under of said mulching sheet (P) and upstream, in the direction of advance of the tractor, of said seed ejection mouth.

Furthermore, the seed sowing machine S is characterized in that said rear chassis assembly 30 comprises earthing up means 40.14, 50, 60 of the ground that perform earthing up of the ground toward said at least one furrow during advance of the tractor. On the other hand, the seed sowing machine S is characterized in that it comprises seed distributing and separating means 20.2, configured as a suction chamber and in which Venturi tube means are provided, downstream of a lower outlet of said suction chamber, according to the direction of the flow of compressed air.

As is readily understandable from the above description, the present invention allows to achieve the objects described in the introductory part of the present disclosure.

In particular, the present invention provides a seeding method and related seed sowing machine, which allow to selectively change the density of the seeds (number of seeds per unit of surface area) deposited in relation to the type of seed to be sown and to the characteristics of the ground in which the seed is deposited.

Moreover, the present invention provides a seeding method and related seed sowing machine, which allow to carry out the operation of holing the mulching sheet and the operation of depositing the seeds in the corresponding furrow through the corresponding holes of the sheet in a substantially simultaneous manner.

Additionally, the present invention provides a seeing method and related seed sowing machine, which allow to make holes in the mulching sheet, whose size substantially corresponds to the size of the seed that is deposited in the corresponding furrow, with no need to replace the means for holing the sheet, according to the type and/or to the size of the seed to be deposited in the furrow through the hole itself.

Furthermore, the present invention provides a seeding method and related seed sowing machine, which allow to change the distance between the holes made in the mulching sheet and hence between the seeds deposited in the corresponding furrow, with no need for the total or partial replacement of the means for holing the mulching sheet.

It should also be noted that the present invention provides a seeding method and related seed sowing machine, which allow to limit both the dimensions and the weight of the machine, in relation to the means for holing the mulching sheet and for depositing the seed in the corresponding furrow.

Moreover, the present invention provides a seeding method and related seed sowing machine, which allow to carry out the application of fertilizing and/or disinfecting substances at each seed deposited in the related furrow, in a precise and economic way.

## Claims

1. Seeding method by means of a seed sowing machine (S) connected to a tractor and comprising:
- at least one hopper (20.1) for containing a mass of seeds and distribution and separating means (20.2) of the seeds contained in said at least one hopper for sowing in at least one furrow in a portion of ground to be sown below said seed sowing machine (S);
- -furrower means (70) that, during advance of the tractor on said portion of ground to be sown, form said at least one furrow, in which the seeds distributed and separated by means of said seed distribution and separating means (20.2) are deposited, said method comprising the steps consisting of:
- providing in said seed sowing machine (S) seed conveying means (20.4, 20.52), to which the seeds distributed and separated by means of said seed distribution and separating means (20.2) are delivered;
- providing in said seed sowing machine (S) pneumatic means (20.5, 20.51) that produce and direct a compressed air flow along said seed conveying means (20.4, 20.52);
- separately transporting each seed, coming from said seed distribution and separating means (20.2), by means of said compressed air flow, along said seed conveying means (20.4, 20.52);
- providing in said seed sowing machine (S) pneumatic ejection means (20.53) of the seeds to be deposited, which are connected in an air-tight manner downstream with respect to said seed conveying means (20.4, 20.52), according to the direction of said compressed air flow, and have an end part configured as seed ejection mouth;
- arranging said seed ejection mouth of said pneumatic ejection means (20.53) above said at least one furrow;
- propelling and ejecting by means of said compressed air flow each seed, distributed and separated from said mass of seeds, through said ejection mouth of said pneumatic ejection means (20.53), into said at least one furrow, sowing a plurality of seeds sequentially in said at least one furrow, said method being **characterized in that** it comprises the steps consisting of:
- providing in said seed sowing machine (S) means for supporting, unwinding and depositing a mulching sheet (P) wherein, during advance of said tractor (S), at least one mulching sheet (P) is unwound from at least one reel (80.7) of mulching sheet, which is held on the ground by means of at least one free end area, arranged upstream of an initial end of said at least one furrow, according to the direction of advance of the tractor;
- arranging a portion of said mulching sheet (P), which is unwound from said at least one reel (80.7), below and close to said seed ejection mouth of said pneumatic ejection means (20.53) and above said at least one furrow, on which the mulching sheet (P) is superimposed;
- forming in said portion of said mulching sheet (P), which is deposited on the ground during advance of said tractor, a series of holes (V) corresponding to said at least one furrow and produced by means of perforation of the sheet (P) by seeds propelled in sequence through said ejection mouth of said pneumatic ejection means (20.53) and which are deposited sequentially in said at least one furrow.

2. Sowing method according to claim 1, **characterized by** the steps consisting of:
- arranging said furrower means (70) below said portion of said mulching sheet (P), which is unwound from said reel (80.7), and forming said at least one furrow in the ground, during advance of said tractor, by means of at least one furrowing member (70.1, 70.5) of said furrower means (70);
- providing said at least one furrowing member (70.1, 70.5) with a slot (F) open toward the ground below;
- arranging said seed ejection mouth of said pneumatic ejection means (20.53) above and at said slot (F);
- propelling each seed that is ejected from said ejection mouth, and which perforates said mulching sheet (P), depositing it in said at least one furrow through said slot (F).

3. Sowing method according to claim 1 and/or 2, **characterized by** the step consisting of arranging said ejection mouth of said pneumatic ejection means (20.53) so as to propel each seed according to a direction essentially orthogonal with respect to an area of said portion of said mulching sheet (P) below said ejection mouth.

4. Sowing method according to the claim 1 and/or 2, **characterized by** the steps consisting of:
- providing fixing means of said seed ejection mouth of said pneumatic ejection means (20.53), configured to fix said ejection mouth in a plurality of different relative arrangements with respect to the direction vertical to the ground;
- fixing said ejection mouth of said pneumatic ejection means (20.53) in a first arrangement of said plurality of different relative arrangements with respect to the vertical direction;
- propelling and ejecting seeds, in sequence, through said ejection mouth of said pneumatic ejection means (20.53) fixed in said first arrangement of said plurality of different relative arrangements with respect to the vertical direction, so as to form in a first portion of said mulching sheet (P), by means of the seeds that are deposited sequentially in said at least one furrow, first holes having a first hole shape / size;
- fixing said ejection mouth of said pneumatic ejection means (20.53) in a second arrangement of said plurality of different relative arrangements with respect to the vertical direction;
- propelling and ejecting seeds, in sequence, through said ejection mouth of said pneumatic ejection means (20.53) fixed in said second arrangement of said plurality of different relative arrangements with respect to the vertical direction, so as to form in a second portion of said mulching sheet (P), by means of the seeds that are deposited sequentially in said at least one furrow, second holes having a second hole shape / size;
- comparing said first hole shape / size in said first portion of said mulching sheet (P) with said second hole shape / size in said second portion of said mulching sheet (P) and operatively fixing said ejection mouth of said pneumatic ejection means (20.53) in said first operating arrangement or in said second operating arrangement according to the hole shape / size considered most suitable for the subsequent development into plants of the seeds deposited in said at least one furrow.

5. Sowing method according to one or more of the preceding claims, **characterized by** the steps consisting of:
- providing distributor means (K) of at least one fertilizing and/or disinfecting substance configured to deposit in said at least one furrow at least one fertilizing and/or disinfecting substance under said mulching sheet (P) and upstream, in the direction of advance of the tractor, of said seed ejection mouth;
- depositing in said at least one furrow, during advance of the tractor, said at least one fertilizing and/or disinfecting substance by means of said distributor means (K).

6. Sowing method according to one or more of the preceding claims, **characterized by** the steps consisting of:
- providing said seed distribution and separating means (20.2) with a suction chamber, having a seed outlet through gravity;
- providing, downstream of said outlet, Venturi tube means arranged upstream of said seed conveying means (20.4);
- passing said compressed air flow through said Venturi tube means toward and through said seed conveying means (20.4, 20.52).

7. Seed sowing machine (S) connected to a tractor and comprising:
- at least one hopper (20.1) for containing a mass of seeds and distribution and separating means (20.2) of the seeds contained in said at least one hopper for sowing in at least one furrow in a portion of ground to be sown below said seed sowing machine (S), and
- furrower means (70) that, during advance of the tractor on said portion of ground to be sown, form said at least one furrow, in which the seeds distributed and separated by means of said seed distribution and separating means (20.2) are deposited,
- seed conveying means (20.4, 20.52), to which the seeds distributed and separated by means of said seed distribution and separating means (20.2) are delivered;
- pneumatic means (20.5, 20.51) that produce and direct a compressed air flow along said seed conveying means (20.4, 20.52), said compressed air flow separately transporting each seed, coming from said seed distribution and separating means (20.2), along said seed conveying means (20.4, 20.52);
- pneumatic ejection means (20.53) of the seeds to be deposited, which are connected in an air-tight manner downstream with respect to said seed conveying means (20.4, 20.52), according to the direction of said compressed air flow, and have an end part configured as seed ejection mouth arranged over said at least one furrow;
and in which each seed, distributed and separated from said mass of seeds, is propelled and ejected by means of said compressed air flow through said ejection mouth of said pneumatic ejection means (20.53), into said at least one furrow, said seed sowing machine (S) being **characterized in that** it comprises:
- means for supporting, unwinding and depositing a mulching sheet (P) wound in at least one reel (80.7), wherein, during advance of said tractor (S), at least one mulching sheet (P) is unwound from at least one reel (80.7), which is held on the ground by means of at least one free end area, arranged upstream of an initial end of said at least one furrow, according to the direction of advance of the tractor, and
- a portion of said mulching sheet (P), which is unwound from said at least one reel (80.7), arranged below and close to said seed ejection mouth of said pneumatic ejection means (20.53) and above said at least one furrow, on which the mulching sheet (P) is superimposed;
and **in that** the portion of said mulching sheet (P), which is deposited on the ground during advance of said tractor, has a series of holes (V) corresponding to said at least one furrow and produced by means of perforation of the sheet (P) by seeds propelled in sequence through said ejection mouth of said pneumatic ejection means (20.53) and which are deposited sequentially in said at least one furrow.

8. Seed sowing machine (S) according to claim 7, **characterized in that** said at least one reel (80.7) of mulching sheet (P) is supported rotating about an axis transverse with respect to the direction of advance of the tractor;
and **in that** at least one rotating guide roller (80.6) of said mulching sheet (P), having an axis essentially parallel to that of said reel (80.7), is arranged at the front, in the direction of advance of the tractor, and close to said ejection mouth of said pneumatic ejection means (20.53), holds said mulching sheet (P) substantially taut, during unwinding from said reel (80.7), and guides said mulching sheet (P) to be arranged below said ejection mouth and close to the surface of the ground on which the mulching sheet (P) is superimposed.

9. Seed sowing machine (S) according to one or more of claims 7 to 8, **characterized in that**:
- said furrower means (70) are arranged below said portion of said mulching sheet (P), which is unwound from said reel (80.7), and comprise at least one furrowing member (70.1, 70.5), which forms said at least one furrow in the ground, during advance of said tractor;
- said at least one furrowing member (70.1, 70.5) has a slot (F) open toward the ground below;
- said seed ejection mouth of said pneumatic ejection means (20.53) is arranged above and at said slot (F), and
**in that** each seed that is ejected from said ejection mouth and perforates said mulching sheet (P) is deposited in said at least one furrow through said slot (F).

10. Seed sowing machine (S) according to one or more of claims 7 to 9, **characterized in that** said ejection mouth of said pneumatic ejection means (20.53) is configured and arranged to propel each seed according to a direction essentially orthogonal with respect to an area of said portion of said mulching sheet (P) below said ejection mouth.

11. Seed sowing machine (S) according to one or more of claims 7 to 10, **characterized in that** it comprises fixing means of said seed ejection mouth of said pneumatic ejection means (20.53) configured to selectively fix said ejection mouth in a plurality of different relative arrangements with respect to the direction vertical to the ground.

12. Seed sowing machine (S) according to the claim 9 or any of claims 10 - 11 in combination with claim 9, **characterized in that** it comprises:
- a front chassis assembly (10), essentially horizontal and connected with respect to the tractor;
- a rear chassis assembly (30), essentially horizontal and which supports at least said furrower means (70), comprising said at least one furrowing member (70.1, 70.5) fixed with respect to said chassis assembly (30), and
- an intermediate assembly (100), configured for the articulated connection of said front chassis assembly (10) and of said rear chassis assembly (30),
and **in that** said rear chassis assembly (30) is supported by means of a plurality of wheels (40.11, 40.12), which rest on the ground and rotate with respect to axes transverse to the direction of advance of the tractor, and comprises selective height adjustment means (30.18, 30.23, 40.13) of said chassis assembly (30) with respect to the axes of said wheels, wherein the relative distance of said rear chassis assembly (30) from the surface of the ground to be sown and correspondingly the depth of penetration into the ground of said at least one furrowing member (70.1, 70.5) during advance of the tractor, is selectively adjusted by means of said selective height adjustment means (30.18, 30.23, 40.13).

13. Seed sowing machine (S) according to the claim 9 or 12 or any of claims 10 - 11 in combination with claim 9, **characterized in that** said at least one furrowing member (70.1, 70.5) comprises means for at least partially covering over said at least one furrow formed during advance of the tractor.

14. Seed sowing machine (S) according to one or more of claims 7 to 13, **characterized in that** it comprises distributor means (K) of at least one fertilizing and/or disinfecting substance associated with said furrower means (70) and configured to deposit in said at least one furrow at least one fertilizing and/or disinfecting substance under of said mulching sheet (P) and upstream, in the direction of advance of the tractor, of said seed ejection mouth.

15. Seed sowing machine (S) according to the claim 12 or any of claims 13 - 14 in combination with claim 12, **characterized in that** said rear chassis assembly (30) comprises earthing up means (40.14, 50, 60) of the ground that perform earthing up of the ground toward said at least one furrow during advance of the tractor.

16. Seed sowing machine (S) according to one or more of claims 7 to 15, wherein said seed distribution and separating means (20.2) comprise a suction chamber, having a seed outlet through gravity, **characterized in that** it comprises, downstream of said outlet, Venturi tube means arranged upstream of said seed conveying means (20.4, 20.52) and through which said compressed air flow passes toward said seed conveying means (20.4, 20.52).

## Patentansprüche

1. Aussaatverfahren mittels einer Sämaschine (S), die an einen Traktor angeschlossen ist und Folgendes umfasst:
- mindestens einen Fülltrichter (20.1) zur Aufnahme einer Samenmasse und Mittel (20.2) zur Verteilung und Vereinzelung von in dem besagten mindestens einen Fülltrichter enthaltenen Samen für die Aussaat in mindestens einer Furche in einem zu besäenden Bodenabschnitt unterhalb der besagten Sämaschine (S);
- Furchenmittel (70), die, während der Vorwärtsfahrt des Traktors über den besagten zu besäenden Bodenabschnitt, die besagte mindestens eine Furche bilden, in der die mittels der besagten Mittel (20.2) zur Verteilung und Vereinzelung von Samen verteilten und vereinzelten Samen abgelegt werden, wobei das besagte Verfahren die Phasen umfasst, bestehend in:
- dem Vorsehen in der besagten Sämaschine (S) von Samenfördermitteln (20.4, 20.52), in die die mittels der besagten Mittel (20.2) zur Verteilung und Vereinzelung von Samen verteilten und vereinzelten Samen gelangen;
- dem Vorsehen in der besagten Sämaschine (S) von pneumatischen Mitteln (20.5, 20.51), die einen Druckluftstrom entlang der besagten Samenfördermittel (20.4, 20.52) erzeugen und leiten;
- dem einzelnen Transportieren jedes Samens, der aus den besagten Mitteln (20.2) zur Verteilung und Vereinzelung von Samen stammt, mittels des besagten Druckluftstroms entlang der besagten Samenfördermittel (20.4, 20.52);
- dem Vorsehen in der besagten Sämaschine (S) von pneumatischen Auswurfmitteln (20.53) von abzulegenden Samen, die pneumatisch abgedichtet und stromabwärts in Bezug auf die besagten Samenfördermittel (20.4, 20.52) entsprechend der Richtung des besagten Druckluftstroms angeschlossen sind und ein als Samenausstoßöffnung konfiguriertes Endteil aufweisen;
- dem Anordnen der besagten Samenausstoßöffnung der besagten pneumatischen Auswurfmittel (20.53) oberhalb der besagten mindestens einen Furche;
- dem Herausschleudern und Ausstoßen mittels des besagten Druckluftstroms jedes Samens, der aus der besagten Samenmasse verteilt und vereinzelt wird, durch die besagte Ausstoßöffnung der besagten pneumatischen Auswurfmittel (20.53) in die besagte mindestens eine Furche, wobei eine Vielzahl von Samen nacheinander in die besagte mindestens eine Furche gesät wird, wobei das besagte Verfahren durch die Phasen gekennzeichnet ist, bestehend in:
- dem Vorsehen in der besagten Sämaschine (S) von Mitteln zum Tragen, Abwickeln und Ablegen einer Mulchfolie (P), wobei, während der Vorwärtsfahrt des besagten Traktors (S), von mindestens einer Mulchfolienrolle (80.7) mindestens eine Mulchfolie (P) abgewickelt wird, die durch mindestens einen freien Endbereich, der stromaufwärts von einem Anfangsende der besagten mindestens einen Furche angeordnet ist, gemäß der Vorwärtsfahrtrichtung des Traktors, auf dem Boden gehalten wird;
- dem Anordnen eines Abschnitts der besagten Mulchfolie (P), der von der besagten mindestens einen Rolle (80.7) abgewickelt wird, unterhalb und in der Nähe der besagten Samenausstoßöffnung der besagten pneumatischen Auswurfmittel (20.53) und oberhalb der besagten mindestens einen Furche, über die die Mulchfolie (P) gelegt wird;
- dem Bilden in dem besagten Abschnitt der besagten Mulchfolie (P), die während der Vorwärtsfahrt des besagten Traktors auf den Boden gelegt wird, einer Aufeinanderfolge von Löchern (V), die der besagten mindestens einen Furche entsprechen und mittels Perforieren der Folie (P) durch die nacheinander durch die besagte Ausstoßöffnung der besagten pneumatischen Auswurfmittel (20.53) herausgeschleuderten Samen hergestellt werden und die nacheinander in der besagten mindestens einen Furche abgelegt werden.

2. Aussaatverfahren gemäß Anspruch 1, durch die Phasen gekennzeichnet, bestehend in:
- dem Anordnen der besagten Furchenmittel (70) unterhalb des besagten Abschnitts der besagten Mulchfolie (P), die von der besagten Rolle (80.7) abgewickelt wird, und dem Bilden der besagten mindestens einen Furche im Boden, während der Vorwärtsfahrt des besagten Traktors, mittels mindestens eines Furchenorgans (70.1, 70.5) der besagten Furchenmittel (70);
- dem Ausstatten des besagten mindestens eines Furchenorgans (70.1, 70.5) mit einem Schlitz (F), der zum darunterliegenden Boden hin offen ist;
- dem Anordnen der besagten Samenausstoßöffnung der besagten pneumatischen Auswurfmittel (20.53) oberhalb und in Übereinstimmung mit dem besagten Schlitz (F);
- dem Herausschleudern jedes Samens, der aus der besagten Ausstoßöffnung ausgestoßen wird und die besagte Mulchfolie (P) durchlöchert, wobei er in der besagten mindestens einen Furche durch den besagten Schlitz (F) abgelegt wird.

3. Aussaatverfahren gemäß Anspruch 1 und/oder 2, durch die Phase gekennzeichnet, bestehend in dem Anordnen der besagten Ausstoßöffnung der besagten pneumatischen Auswurfmittel (20.53) auf eine Weise, dass jeder Samen gemäß einer Richtung herausgeschleudert wird, die im Wesentlichen orthogonal in Bezug auf einen Bereich des besagten Abschnitts der besagten unterhalb der besagten Ausstoßöffnung liegenden Mulchfolie (P) verläuft.

4. Aussaatverfahren gemäß Anspruch 1 und/oder 2, durch die Phasen gekennzeichnet, bestehend in:
- dem Vorsehen von Befestigungsmitteln der besagten Samenausstoßöffnung der besagten pneumatischen Auswurfmittel (20.53), die konfiguriert sind, um die besagte Ausstoßöffnung in einer Vielzahl verschiedener relativer Anordnungen in Bezug auf die Richtung vertikal zum Boden zu befestigen;
- dem Befestigen der besagten Ausstoßöffnung der besagten pneumatischen Auswurfmittel (20.53) in einer ersten Anordnung der besagten Vielzahl verschiedener relativer Anordnungen in Bezug auf die Richtung vertikal zum Boden;
- dem Herausschleudern und Ausstoßen der Samen, nacheinander, durch die besagte Ausstoßöffnung der besagten pneumatischen Auswurfmittel (20.53), die in der besagten ersten Anordnung der besagten Vielzahl verschiedener relativer Anordnungen in Bezug auf die vertikale Richtung befestigt wird, so dass in einem ersten Abschnitt der besagten Mulchfolie (P), mittels der Samen, die nacheinander in der besagten mindestens einen Furche abgelegt werden, erste Löcher mit einer ersten Lochform / Lochgrö-ße gebildet werden;
- dem Befestigen der besagten Ausstoßöffnung der besagten pneumatischen Auswurfmittel (20.53) in einer zweiten Anordnung der besagten Vielzahl verschiedener relativer Anordnungen in Bezug auf die vertikale Richtung;
- dem Herausschleudern und Ausstoßen der Samen, nacheinander, durch die besagte Ausstoßöffnung der besagten pneumatischen Auswurfmittel (20.53), die in der besagten zweiten Anordnung der besagten Vielzahl verschiedener relativer Anordnungen in Bezug auf die vertikale Richtung befestigt wird, so dass in einem zweiten Abschnitt der besagten Mulchfolie (P), mittels der Samen, die nacheinander in der besagten mindestens einen Furche abgelegt werden, zweite Löcher mit einer zweiten Lochform / Lochgröße gebildet werden;
- dem Vergleichen der besagten ersten Lochform / Lochgröße in dem besagten ersten Abschnitt der besagten Mulchfolie (P) mit der besagten zweiten Lochform / Lochgröße in dem besagten zweiten Abschnitt der besagten Mulchfolie (P) und dem betriebsmäßigen Befestigen der besagten Ausstoßöffnung der besagten pneumatischen Auswurfmittel (20.53) in der besagten ersten betriebsmäßigen Anordnung oder in der besagten zweiten betriebsmäßigen Anordnung je nach der Lochform/Lochgröße, die für die anschließende Entwicklung zu Pflänzchen der in der besagten mindestens einen Furche abgelegten Samen als am geeignetsten angesehen wird.

5. Aussaatverfahren gemäß einem oder mehreren der vorhergehenden Ansprüche, durch die Phasen gekennzeichnet, bestehend in:
- dem Ausstatten der Verteilermittel (K) mit mindestens einer Dünge- und/oder Desinfektionsmittelsubstanz, die konfiguriert sind, um in der besagten mindestens einen Furche mindestens eine Dünge- und/oder Desinfektionsmittelsubstanz unterhalb der besagten Mulchfolie (P), und stromaufwärts, in Vorwärtsfahrtrichtung des Traktors, der besagten Samenausstoßöffnung abzulegen;
- dem Ablegen in der besagten mindestens einen Furche, während der Vorwärtsfahrt des Traktors, der besagten mindestens einen Dünge- und/oder Desinfektionsmittelsubstanz mittels der besagten Verteilermittel (K).

6. Aussaatverfahren gemäß einem oder mehreren der vorhergehenden Ansprüche, durch die Phasen gekennzeichnet, bestehend in:
- dem Ausstatten der besagten Mittel (20.2) zur Verteilung und Vereinzelung von Samen mit einer Saugkammer, die einen Samenausgang durch Schwerkraft aufweist;
- dem Vorsehen, stromabwärts des besagten Ausgangs, von Venturi-Rohrmitteln, die stromaufwärts der besagten Samenfördermittel (20.4) angeordnet sind;
- dem Leiten des besagten Druckluftstroms durch die besagten Venturi-Rohrmittel zu den und durch die besagten Samenfördermittel (20.4, 20.52).

7. Sämaschine (S), verbunden mit einem Traktor und Folgendes umfassend:
- mindestens einen Fülltrichter (20.1) zur Aufnahme einer Samenmasse und Mittel (20.2) zur Verteilung und Vereinzelung von in dem besagten mindestens einen Fülltrichter enthaltenen Samen für die Aussaat in mindestens einer Furche in einem zu besäenden Bodenabschnitt unterhalb der besagten Sämaschine (S), und
- Furchenmittel (70), die, während der Vorwärtsfahrt des Traktors über den besagten zu besäenden Bodenabschnitt, die besagte mindestens eine Furche bilden, in der die mittels der besagten Mittel (20.2) zur Verteilung und Vereinzelung von Samen verteilten und vereinzelten Samen abgelegt werden,
- Samenfördermittel (20.4, 20.52), in die die mittels der besagten Mittel (20.2) zur Verteilung und Vereinzelung von Samen verteilten und vereinzelten Samen gelangen;
- pneumatische Mittel (20.5, 20.51), die einen Druckluftstrom entlang der besagten Samenfördermittel (20.4, 20.52) erzeugen und leiten, wobei der Druckluftstrom einzeln jeden Samen, der aus den besagten Mitteln (20.2) zur Verteilung und Vereinzelung von Samen stammt, entlang der besagten Samenfördermittel (20.4, 20.52) transportiert;
- pneumatische Auswurfmittel (20.53) der abzulegenden Samen, die pneumatisch abgedichtet und stromabwärts in Bezug auf die besagten Samenfördermittel (20.4, 20.52) entsprechend der Richtung des besagten Druckluftstroms angeschlossen sind und ein als Samenausstoßöffnung konfiguriertes Endteil aufweisen, das oberhalb der besagten einen Furche angeordnet ist;
und wobei jeder Samen, der aus der besagten Samenmasse verteilt und vereinzelt wird, mittels des besagten Druckluftstroms durch die besagte Ausstoßöffnung der besagten pneumatischen Auswurfmittel (20.53) herausgeschleudert und in die besagte mindestens eine Furche ausgestoßen wird, wobei die besagte Sämaschine (S) **dadurch gekennzeichnet ist, dass** sie Folgendes umfasst:
- Mittel zum Tragen, Abwickeln und Ablegen einer Mulchfolie (P), die auf mindestens eine Rolle (80.7) aufgewickelt ist, wobei, während der Vorwärtsfahrt des besagten Traktors (S), von der besagten mindestens einen Rolle (80.7) mindestens eine Mulchfolie (P) abgewickelt wird, die durch mindestens einen freien Endbereich, der stromaufwärts von einem Anfangsende der besagten mindestens einen Furche angeordnet ist, gemäß der Vorwärtsfahrtrichtung des Traktors, auf dem Boden gehalten wird, und
- einen Abschnitt der besagten Mulchfolie (P), der von der besagten mindestens einen Rolle (80.7) abgewickelt wird, angeordnet unterhalb und in der Nähe der besagten Samenausstoßöffnung der besagten pneumatischen Auswurfmittel (20.53) und oberhalb der besagten mindestens einen Furche, über die die Mulchfolie (P) gelegt wird;
und **dadurch gekennzeichnet, dass** der Abschnitt der besagten Mulchfolie (P), die während der Vorwärtsfahrt des besagten Traktors auf den Boden gelegt wird, eine Aufeinanderfolge von Löchern (V) aufweist, die der besagten mindestens einen Furche entsprechen und mittels Perforieren der Folie (P) durch die nacheinander durch die besagte Ausstoßöffnung der besagten pneumatischen Auswurfmittel (20.53) herausgeschleuderten Samen hergestellt werden und die nacheinander in der besagten mindestens einen Furche abgelegt werden.

8. Sämaschine (S) gemäß Anspruch 7, **dadurch gekennzeichnet, dass** die besagte mindestens eine Rolle (80.7) der Mulchfolie (P) um eine quer zur Vorwärtsfahrtrichtung des Traktors verlaufende Achse drehbar gestützt ist;
und dadurch, dass mindestens eine schwenkbare Führungsrolle (80.6) der besagten Mulchfolie (P), aufweisend eine im Wesentlichen parallel zu der besagten Rolle (80.7) verlaufende Achse, im vorderen Bereich, in Vorwärtsfahrtrichtung des Traktors angeordnet ist, und in der Nähe der besagten Ausstoßöffnung der besagten pneumatischen Auswurfmittel (20.53) die besagte Mulchfolie (P) während des Abwickelns von der besagten Rolle (80.7) im Wesentlichen gestreckt hält, und die besagte Mulchfolie (P) so führt, dass sie sich unterhalb der besagten Ausstoßöffnung und in der Nähe der Oberfläche des Bodens anordnet, auf die die Mulchfolie (P) aufgelegt wird.

9. Sämaschine (S) gemäß einem oder mehreren der Ansprüche von 7 bis 8, **dadurch gekennzeichnet, dass**:
- die besagten Furchenmittel (70) unterhalb des besagten Abschnitts der besagten Mulchfolie (P) angeordnet sind, die von der Spule (80.7) abgewickelt wird, und mindestens ein Furchenorgan (70.1, 70.5) umfassen, das die besagte mindestens eine Furche während der Vorwärtsfahrt des besagten Traktors im Boden bildet;
- das besagte mindestens eine Furchenorgan (70.1, 70.5) einen Schlitz (F) aufweist, der zum darunterliegenden Boden hin offen ist;
- die besagte Samenausstoßöffnung der besagten pneumatischen Auswurfmittel (20.53) oberhalb und in Übereinstimmung mit dem besagten Schlitz (F) angeordnet ist, und
dadurch, dass jeder Samen, der aus der besagten Ausstoßöffnung ausgestoßen wird und die besagte Mulchfolie (P) perforiert, in der mindestens einen Furche durch den besagten Schlitz (F) hindurch abgelegt wird.

10. Sämaschine (S) gemäß einem oder mehreren der Ansprüche von 7 bis 9, **dadurch gekennzeichnet, dass** die besagte Ausstoßöffnung der besagten pneumatischen Auswurfmittel (20.53) konfiguriert und angeordnet ist, um jeden Samen gemäß einer Richtung vorwärtszuschleudern, die im Wesentlichen orthogonal in Bezug auf einen Bereich des besagten Abschnitts der besagten unterhalb der besagten Ausstoßöffnung liegenden Mulchfolie (P) verläuft.

11. Sämaschine (S) gemäß einem oder mehreren der Ansprüche von 7 bis 10, **dadurch gekennzeichnet, dass** sie Mittel zur Befestigung der besagten Samenausstoßöffnung der besagten Auswurfmittel (20.53) umfasst, die konfiguriert sind, um die besagte Ausstoßöffnung in einer Vielzahl verschiedener relativer Anordnungen in Bezug auf die Richtung vertikal zum Boden selektiv zu befestigen.

12. Sämaschine (S) gemäß Anspruch 9 oder einem der Ansprüche 10 bis 11 in Kombination mit Anspruch 9, **dadurch gekennzeichnet, dass** sie Folgendes umfasst:
- eine vordere Rahmengruppe (10), die im Wesentlichen horizontal und in Bezug auf den Traktor verbunden ist;
- eine hintere Rahmengruppe (30), die im Wesentlichen horizontal ist und mindestens die besagten Furchenmittel (70) trägt, die das besagte mindestens eine Furchenorgan (70.1, 70.5) umfassen, das in Bezug auf die besagte Rahmengruppe (30) befestigt ist, und
- eine Zwischengruppe (100), die für die gelenkige Verbindung der besagten vorderen Rahmengruppe (10) und der besagten hinteren Rahmengruppe (30) konfiguriert ist,
und dadurch, dass die besagte hintere Rahmengruppe (30) mittels einer Vielzahl von Rädern (40.11, 40.12) getragen wird, die in Bezug auf den Boden gestützt sind und sich in Bezug auf Achsen quer zur Vorwärtsfahrtrichtung des Traktors drehen, und dass sie Mittel zur selektiven Höheneinstellung (30.18, 30.23, 40.13) der besagten Rahmengruppe (30) in Bezug auf die Achsen der besagten Räder umfasst, wodurch mittels der selektiven Höheneinstellungsmittel (30.18, 30.23, 40.13) der relative Abstand der besagten hinteren Rahmengruppe (30) in Bezug auf die Oberfläche des zu besäenden Bodens und dementsprechend die Eindringtiefe in den Boden des besagten mindestens einen Furchenorgans (70.1, 70.5) während der Vorwärtsfahrt des Traktors selektiv eingestellt wird.

13. Sämaschine (S) gemäß Anspruch 9 oder 12 oder einem der Ansprüche 10 - 11 in Kombination mit dem Anspruch 9, **dadurch gekennzeichnet, dass** das besagte mindestens eine Furchenorgan (70.1, 70.5) Mittel zur mindestens teilweisen Abdeckung der besagten mindestens einen Furche umfasst, die während der Vorwärtsfahrt des Traktors gebildet wird.

14. Sämaschine (S) gemäß einem oder mehreren der Ansprüche von 7 bis 13, **dadurch gekennzeichnet, dass** sie Verteilermittel (K) mindestens einer Dünge- und/oder Desinfektionsmittelsubstanz umfasst, die mit den besagten Furchenmitteln (70) verbunden und konfiguriert sind, um in der besagten mindestens einen Furche mindestens eine Dünge- und/oder Desinfektionsmittelsubstanz unterhalb der besagten Mulchfolie (P) und stromaufwärts, in Vorwärtsfahrtrichtung des Traktors, der besagten Samenausstoßöffnung abzulegen.

15. Sämaschine (S) gemäß Anspruch 12 oder einem der Ansprüche 13 - 14 in Kombination mit Anspruch 12, **dadurch gekennzeichnet, dass** die besagte hintere Rahmengruppe (30) Bodenanhäufelungsmittel (40.14, 50, 60) umfasst, die die Bodenanhäufelung in Richtung der besagten mindestens einen Furche während der Vorwärtsfahrt des Traktors ausführen.

16. Sämaschine (S) gemäß einem oder mehreren der Ansprüche von 7 bis 15, wobei die besagten Mittel (20.2) zur Verteilung und Vereinzelung von Samen eine Saugkammer umfassen, die einen Samenausgang durch Schwerkraft aufweist, **dadurch gekennzeichnet, dass** sie stromabwärts des besagten Ausgangs Venturi-Rohrmittel umfasst, die stromaufwärts der besagten Samenfördermittel (20.4, 20.52) angeordnet sind und in denen der besagte Druckluftstrom zu den besagten Samenfördermitteln (20.4, 20.52) verläuft.

## Revendications

1. Procédé de semis au moyen d'un semoir (S) relié à un tracteur, comprenant :
- au moins une trémie (20.1) destinée à contenir une masse de semences et des moyens (20.2) de distribution et de singularisation des semences contenues dans ladite au moins une trémie pour le semis dans au moins un sillon d'une portion de terrain à ensemencer sous ledit semoir (S) ;
- des moyens de création de sillon (70) qui, pendant que le tracteur avance sur ladite portion de terrain à ensemencer, forment ledit au moins un sillon, dans lequel les semences sont déposées, distribuées et singularisées au moyen desdits moyens (20.2) de distribution et de singularisation des semences, ledit procédé comprenant les phases consistant à :
- fournir dans ledit semoir (S) des moyens convoyeurs de semences (20.4, 20.52), dans lesquels sont déposées les semences distribuées et singularisées par lesdits moyens (20.2) de distribution et de singularisation de semences ;
- fournir dans ledit semoir (S) des moyens pneumatiques (20.5, 20.51) qui produisent et dirigent un flux d'air comprimé le long desdits moyens convoyeurs de semences (20.4, 20.52) ;
- transporter chaque semence individuellement, provenant desdits moyens (20.2) de distribution et de singularisation des semences, au moyen dudit flux d'air comprimé, le long desdits moyens convoyeurs de semences (20.4, 20.52) ;
- fournir dans ledit semoir (S) des moyens d'éjection pneumatique (20.53) des semences à déposer, lesquels sont raccordés de manière pneumatique et étanche et en aval par rapport auxdits moyens convoyeurs de semences (20.4, 20.52), selon la direction dudit flux d'air comprimé, et présentent une partie terminale configurée en tant qu'orifice d'éjection des semences ;
- disposer ledit orifice d'éjection des semences desdits moyens d'éjection pneumatique (20.53) au-dessus dudit au moins un sillon ;
- projeter et éjecter, au moyen dudit flux d'air comprimé, chaque semence, distribuée et singularisée à partir de ladite masse de semences, à travers ledit orifice d'éjection desdits moyens d'éjection pneumatique (20.53), dans ledit au moins un sillon, en semant une multitude de semences de manière séquentielle dans ledit au moins un sillon, ledit procédé étant **caractérisé par** les phases consistant à :
- fournir dans ledit semoir (S) des moyens de support, de déroulement et de dépôt d'une toile de paillage (P) où, lorsque ledit tracteur (S) avance, depuis au moins une bobine (80.7) de toile de paillage soit déroulée au moins une toile de paillage (P), qui est retenue au sol par au moins une zone d'extrémité libre, disposée en amont d'une extrémité initiale dudit au moins un sillon, selon le sens de marche du tracteur ;
- placer une partie de ladite toile de paillage (P), qui est déroulée de ladite au moins une bobine (80.7), au-dessous et à proximité dudit orifice d'éjection des semences desdits moyens d'éjection pneumatique (20.53) et au-dessus dudit au moins un sillon, sur lequel la toile de paillage (P) est superposée ;
- former dans ladite portion de ladite toile de paillage (P), qui est déposée sur le sol lors de l'avancement dudit tracteur, une succession de trous (V) correspondant audit au moins un sillon et réalisés par perforation de ladite toile (P) de la part des semences éjectées en séquence par ledit orifice d'éjection desdits moyens d'éjection pneumatique (20.53) et qui sont déposées en séquence dans ledit au moins un sillon.

2. Procédé de semis selon la revendication 1, **caractérisé par** les phases consistant à :
- disposer ledit moyen de création de sillon (70) sous ladite portion de ladite toile de paillage (P), qui est déroulée depuis ladite bobine (80.7), et former ledit au moins un sillon dans le sol, pendant que ledit tracteur avance, au moyen d'au moins un organe de création de sillon (70.1, 70.5) desdits moyens de création de sillon (70) ;
- pourvoir ledit au moins un organe de création de sillon (70.1, 70.5) d'une fente (F) ouverte vers le sol sous-jacent ;
- disposer ledit orifice d'éjection des semences desdits moyens d'éjection pneumatique (20.53) au-dessus et au niveau de ladite fente (F) ;
- projeter chaque semence qui est éjectée par ledit orifice d'éjection, et qui perfore ladite toile de paillage (P), en la déposant dans ledit au moins un sillon à travers ladite fente (F).

3. Procédé de semis selon la revendication 1 et/ou 2, **caractérisé par** l'étape consistant à disposer ledit orifice d'éjection desdits moyens d'éjection pneumatique (20.53) de manière à projeter chaque semence dans une direction essentiellement orthogonale par rapport à une zone de ladite portion de ladite toile de paillage (P) située en dessous dudit orifice d'éjection.

4. Procédé de semis selon la revendication 1 et/ou 2, **caractérisé par** les phases consistant à :
- fournir des moyens de fixation dudit orifice d'éjection de semences desdits moyens d'éjection pneumatique (20.53), configurés pour fixer ledit orifice d'éjection dans une multitude de dispositions relatives différentes par rapport à la direction verticale au sol ;
- fixer ledit orifice d'éjection desdits moyens d'éjection pneumatique (20.53) dans une première disposition de ladite multitude de dispositions différentes par rapport à la direction verticale ;
- projeter et éjecter des semences, en séquence, à travers ledit orifice d'éjection desdits moyens d'éjection pneumatique (20.53) fixé dans ladite première disposition de ladite multitude de dispositions relatives différentes par rapport à la direction verticale, de manière à former dans une première portion de ladite feuille de paillage (P), au moyen des semences qui sont déposées séquentiellement dans ledit au moins un sillon, des premiers trous présentant une première conformation/taille de trou ;
- fixer ledit orifice d'éjection desdits moyens d'éjection pneumatique (20.53) dans une seconde disposition de ladite multitude de dispositions différentes par rapport à la direction verticale ;
- projeter et éjecter des semences, en séquence, à travers ledit orifice d'éjection desdits moyens d'éjection pneumatique (20.53) fixé dans ladite seconde disposition de ladite multitude de dispositions relatives différentes par rapport à la direction verticale, de manière à former dans une seconde portion de ladite feuille de paillage (P), au moyen des semences qui sont déposées séquentiellement dans ledit au moins un sillon, des seconds trous présentant une seconde conformation/taille de trou ;
- comparer ladite première conformation/taille de trou dans ladite première portion de ladite toile de paillage (P) avec ladite seconde conformation/taille de trou dans ladite seconde portion de ladite toile de paillage (P) et fixer de manière opérationnelle ledit orifice d'éjection desdits moyens d'éjection pneumatique (20.53) dans ladite première disposition opérationnelle ou dans ladite seconde disposition opérationnelle en fonction de la conformation/taille de trou considérée comme la plus appropriée pour le développement ultérieur en plantules des semences déposées dans ledit au moins un sillon.

5. Procédé de semis selon une ou plusieurs des revendications précédentes, **caractérisé par** les phases consistant à :
- fournir des moyens distributeurs (K) d'au moins une substance fertilisante et/ou désinfectante configurés pour déposer dans ledit au moins un sillon au moins une substance fertilisante et/ou désinfectante au-dessous de ladite toile de paillage (P) et en amont, dans le sens de marche du tracteur, dudit orifice d'éjection des semences ;
- déposer dans ledit au moins un sillon, pendant que le tracteur avance, ladite au moins une substance fertilisante et/ou désinfectante au moyen desdits moyens de distribution (K).

6. Procédé de semis selon une ou plusieurs des revendications précédentes, **caractérisé par** les phases consistant à :
- pourvoir lesdits moyens (20.2) de distribution et de singularisation des semences d'une chambre d'aspiration, présentant une sortie de semences par gravité ;
- fournir, en aval de ladite sortie, des moyens à tube Venturi disposés en amont desdits moyens convoyeurs de semences (20.4) ;
- faire passer ledit flux d'air comprimé à travers lesdits moyens à tube Venturi vers et à travers lesdits moyens convoyeurs de semences (20.4, 20.52).

7. Semoir (S) attelé à un tracteur et comprenant :
- au moins une trémie (20.1) destinée à contenir une masse de semences et des moyens (20.2) de distribution et de singularisation des semences contenues dans ladite au moins une trémie pour le semis dans au moins un sillon d'une portion de terrain à ensemencer sous ledit semoir (S), et
- des moyens de création de sillon (70) qui, au fur et à mesure que le tracteur avance sur ladite portion de terrain à ensemencer, forment ledit au moins un sillon, dans lequel sont déposées les semences distribuées et singularisées par lesdits moyens (20.2) de distribution et de singularisation des semences,
- des moyens convoyeurs de semences (20.4, 20.52), dans lesquels sont acheminées les semences distribuées et singularisées par lesdits moyens (20.2) de distribution et de singularisation des semences ;
- des moyens pneumatiques (20.5, 20.51) qui produisent et dirigent un flux d'air comprimé le long desdits convoyeurs de semences (20.4, 20.52), lequel flux d'air comprimé transporte chaque semence individuellement, provenant desdits moyens (20.2) de distribution et de singularisation des semences, le long desdits moyens convoyeurs de semences (20.4, 20.52) ;
- des moyens d'éjection pneumatique (20.53) des semences à déposer, lesquels sont raccordés de manière pneumatique et étanche et en aval desdits moyens convoyeurs de semences (20.4, 20.52), selon la direction dudit flux d'air comprimé, et présentent une partie terminale configurée comme un orifice d'éjection des semences, disposée au-dessus dudit au moins un sillon ;
- où chaque semence, répartie et singularisée à partir de ladite masse de semences, est projetée et éjectée au moyen dudit flux d'air comprimé à travers ledit orifice d'éjection desdits moyens d'éjection pneumatique (20.53), dans ledit au moins un sillon, ledit semoir (S) étant **caractérisé par le fait qu'**il comprend :
- des moyens de support, de déroulement et de dépôt d'une toile de paillage (P) enroulée sur au moins une bobine (80.7), dans lesquels, lors de l'avancement dudit tracteur (S), depuis ladite au moins une bobine (80.7) est déroulée au moins une toile de paillage (P), qui est retenue au sol au moyen d'au moins une zone d'extrémité libre, disposée en amont d'une extrémité initiale dudit au moins un sillon, en fonction du sens de marche du tracteur, et
- une portion de ladite toile de paillage (P), qui est déroulée de ladite au moins une bobine (80.7), placée au-dessous et à proximité dudit orifice d'éjection des semences desdits moyens d'éjection pneumatique (20.53) et au-dessus dudit au moins un sillon, sur lequel la toile de paillage (P) est superposée ;
et **par le fait que** la portion de ladite toile de paillage (P), qui est déposée sur le sol lors de l'avancement dudit tracteur, présente une succession de trous (V) correspondants audit au moins un sillon et réalisés par perforation de ladite toile (P) de la part des semences éjectées en séquence par ledit orifice d'éjection desdits moyens d'éjection pneumatique (20.53) et qui sont déposées en séquence dans ledit au moins un sillon.

8. Semoir (S) selon la revendication 7, **caractérisé par le fait que** ladite au moins une bobine (80.7) de toile de paillage (P) est supportée de manière rotative autour d'un axe transversal par rapport au sens de marche du tracteur ;
et par le fait qu'au moins un rouleau pivotant (80.6) de guidage de ladite toile de paillage (P), ayant un axe essentiellement parallèle à celui de ladite bobine (80.7), est disposé à l'avant, dans le sens de marche du tracteur, et à proximité par rapport à ledit orifice d'éjection desdits moyens d'éjection pneumatique (20. 53), maintient ladite toile de paillage (P) substantiellement tendue, pendant son déroulement depuis ladite bobine (80.7), et guide ladite toile de paillage (P) pour qu'elle se dispose en dessous dudit orifice d'éjection et à proximité de la surface du sol sur lequel ladite toile de paillage (P) est superposée.

9. Semoir (S) selon une ou plusieurs des revendications 7 à 8, **caractérisé par le fait que** :
- lesdits moyens de création de sillon (70) sont disposés sous ladite portion de ladite toile de paillage (P), qui est déroulée depuis ladite bobine (80.7), et comprennent au moins un organe de création de sillon (70.1, 70.5), qui forme ledit au moins un sillon dans le sol, pendant l'avancement dudit tracteur ;
- ledit au moins un organe de création de sillon (70.1, 70.5) présente une fente (F) ouverte vers le sol sous-jacent ;
- ledit orifice d'éjection des semences desdits moyens d'éjection pneumatique (20.53) est disposé au-dessus et au niveau de ladite fente (F), et
**par le fait que** chaque semence qui est éjectée par ledit orifice d'éjection et perfore ladite toile de paillage (P) est déposée dans ledit au moins un sillon à travers ladite fente (F).

10. Semoir (S) selon une ou plusieurs des revendications 7 à 9, **caractérisé par le fait que** ledit orifice d'éjection desdits moyens d'éjection pneumatique (20.53) est configuré et disposé de manière à projeter chaque semence dans une direction essentiellement orthogonale par rapport à une zone de ladite portion de ladite toile de paillage (P) située en dessous dudit orifice d'éjection.

11. Semoir (S) selon une ou plusieurs des revendications 7 à 10, **caractérisé par** le fait qu'il comprend des moyens de fixation dudit orifice d'éjection de semences desdits moyens d'éjection pneumatique (20.53), configurés pour fixer sélectivement ledit orifice d'éjection dans une multitude de dispositions relatives différentes par rapport à la direction verticale au sol.

12. Semoir (S) selon la revendication 9 ou l'une des revendications 10 - 11 en combinaison avec la revendication 9, **caractérisé par** le fait qu'il comprend :
- un groupe (10) de cadre avant, essentiellement horizontal et raccordé par rapport au tracteur ;
- un groupe (30) de cadre arrière, essentiellement horizontal et qui support au moins lesdits moyens de création de sillon (70), comprenant ledit au moins un organe de création de sillon (70.1, 70.5) fixe par rapport audit groupe de cadre (30), et
- un groupe (100), intermédiaire, configuré pour le raccordement articulé dudit groupe (10) de cadre avant et dudit groupe (30) de cadre arrière,
et par le fait que ledit groupe (30) de cadre arrière est supporté au moyen d'une multitude de roues (40.11, 40.12), qui reposent sur le sol et tournent par rapport à des axes transversaux au sens de marche du tracteur, et comprend des moyens de réglage sélectif de la hauteur (30.18, 30.23, 40.13) dudit groupe de cadre (30) par rapport aux axes desdites roues, où au moyen desdits moyens de réglage sélectif de la hauteur (30.18, 30.23, 40.13) est sélectivement réglée la distance relative dudit groupe (30) de cadre arrière par rapport à la surface du sol à ensemencer et, en conséquence, la profondeur de pénétration dans le sol dudit au moins un organe de création de sillon (70.1, 70.5) pendant l'avancement du tracteur.

13. Semoir (S) selon la revendication 9 ou 12 ou l'une des revendications 10 - 11 en combinaison avec la revendication 9, **caractérisé par le fait que** ledit au moins un organe de création de sillon (70.1, 70.5) comprend des moyens pour recouvrir au moins partiellement ledit au moins un sillon formé pendant l'avancement du tracteur.

14. Semoir (S) selon une ou plusieurs des revendications 7 à 13, **caractérisé par** le fait qu'il comprend des moyens distributeurs (K) d'au moins une substance fertilisante et/ou désinfectante associés auxdits moyens de création de sillon (70) et configurés pour déposer dans ledit au moins un sillon au moins une substance fertilisante et/ou désinfectante au-dessous de ladite toile de paillage (P) et en amont, dans le sens de marche du tracteur, dudit orifice d'éjection des semences.

15. Semoir (S) selon la revendication 12 ou l'une des revendications 13 - 14 en combinaison avec la revendication 12, **caractérisé par le fait que** ledit groupe (30) de cadre arrière comprend des moyens de buttage (40.14, 50, 60) du terrain pour butter le sol vers ledit au moins un sillon pendant l'avancement du tracteur.

16. Semoir (S) selon une ou plusieurs des revendications 7 à 15, où lesdits moyens (20.2) de distribution et de singularisation des semences comprennent une chambre d'aspiration, présentant une sortie de semences par gravité, **caractérisé par** le fait qu'il comprend, en aval de ladite sortie, des moyens à tube de Venturi disposés en amont desdits moyens convoyeurs de semences (20.4, 20.52) et où passe ledit flux d'air comprimé vers lesdits moyens convoyeurs de semences (20.4, 20.52).
